# EUROPEAN PATENT APPLICATION

(11) **EP 4 804 007 A1**
(43) Date of publication of application: **09.09.2026**
(21) Application number: 23958625.8
(22) Date of filing: 17.11.2023
(51) Int. Cl.: G06F 3/16

(54) **VOICE INTERACTION METHOD AND APPARATUS**

(71) Applicant: Yinwang Intelligent Technologies Co., Ltd., Shenzhen, Guangdong 518110 (CN)
(72) Inventor: XIAO, Yubo, Shenzhen, Guangdong 518110 (CN); NIE, Weiran, Shenzhen, Guangdong 518110 (CN); LI, Geng, Shenzhen, Guangdong 518110 (CN)
(74) Representative: Gill Jennings & Every LLP
(86) International application number: PCT/CN2023/132308
(87) International publication number: WO 2025/102351

(57) **Abstract**

This application provides a voice interaction method and apparatus. The voice interaction method may be applied to the field of terminal technologies. The voice interaction method includes: controlling a display apparatus to display an interface, where the interface is a first-level interface; obtaining a voice instruction of a user; and controlling the display apparatus to display another interface corresponding to the voice instruction, where the another interface is an interface above a second level. In this application, the user may view an interface with a deep nesting level by giving the voice instruction. This helps improve voice interaction experience of the user.

## Description

### TECHNICAL FIELD

This application relates to the field of terminal technologies, and more specifically, to a voice interaction method and apparatus.

### BACKGROUND

In a current process of using a terminal device, if a user expects to view some display interfaces with a deep nesting level, the user needs to actively memorize a jump path of the display interface with the deep nesting level in advance. Consequently, efficiency of viewing a target interface by the user is low, and user experience is poor.

### SUMMARY

This application provides a voice interaction method and apparatus, to help improve human-machine interaction experience and human-machine interaction efficiency of a user.

According to a first aspect, a voice interaction method is provided. The method includes: controlling a display apparatus to display a first interface, where the first interface is a first-level interface; obtaining a first voice instruction of a user; and controlling, according to the first voice instruction, the display apparatus to display a second interface corresponding to the first voice instruction, where the second interface is an interface above a second level.

Based on the technical solution, when the user gives the voice instruction, a terminal device may control the display apparatus to switch from displaying the first-level interface to displaying the interface above the second level. In this way, switching from a current interface to an interface with a deep nesting level can be implemented, to help improve voice interaction experience of the user.

The first level and the second level in this embodiment of this application may be relative concepts. For example, an interface displayed on the terminal device when the terminal device obtains the voice instruction may be the first-level interface, and a target interface that may be indicated by the voice instruction may be a second-level interface or the interface above the second level. The second-level interface may also be understood as an interface displayed after one jump from the current interface, and the interface above the second level may be an interface displayed after at least two jumps from the current interface.

In some possible implementations, content of the first voice instruction includes content indicating a second-level interface or an interface above the second level.

With reference to the first aspect, in some implementations of the first aspect, the second interface is an interface of a setting application, a video application, a music application, or a driver's guide application.

Based on the technical solution, the terminal device can implement switching from the current interface to the interface with a deep nesting level in the application like the setting application, the video application, the music application, or the driver's guide application. This helps improve the voice interaction experience of the user.

In some possible implementations, the second interface may be an interface of a preset application (for example, a setting application, a driver's guide application, a video application, a music application, or a navigation map application) or a third-party application (for example, an application downloaded from an application store).

With reference to the first aspect, in some implementations of the first aspect, controlling, according to the first voice instruction, the display apparatus to display the second interface corresponding to the first voice instruction includes: controlling, according to the first voice instruction, the display apparatus to display at least one third interface and then display the second interface.

Based on the technical solution, the terminal device may control the display apparatus to first switch from the first interface to the at least one third interface, and then switch from the at least one third interface to the second interface. In this way, an interface switching process and a specific location of the second interface (or the target interface) can be displayed to the user, to reduce learning costs of using an application by the user. In addition, the interface switching process is more human-like, to help improve the voice interaction experience of the user.

With reference to the first aspect, in some implementations of the first aspect, the method further includes: controlling the display apparatus to display jump progress in the first interface and/or the second interface.

Based on the technical solution, in a process of jumping from the current interface to the target interface, the jump progress may be displayed in each interface. In this way, it can be convenient for the user to view the jump progress from the current interface to the target interface. This helps improve the voice interaction experience of the user.

In some possible implementations, controlling the display apparatus to display the jump progress in the first interface and the second interface includes: displaying, in the first interface and the second interface, a total interface switching quantity and a sequence number of the current interface in a switching process.

With reference to the first aspect, in some implementations of the first aspect, controlling, according to the first voice instruction, the display apparatus to display the second interface corresponding to the first voice instruction includes: controlling, according to the first voice instruction and based on first interface jump information, the display apparatus to display the second interface, where the first interface jump information includes jump path information of a plurality of levels of interfaces, and the plurality of levels of interfaces includes the first interface and the second interface.

When the user currently asks how to perform an operation, a corresponding action of the terminal device may be displaying an interface of a learning manual, and playing "let's check the learning manual together" through voice broadcast. This does not directly resolve a user problem. When the user expects to perform the operation, the user still needs to understand content in a document in the learning manual, and searches for a corresponding solution in the complex learning manual. Consequently, learning costs of the user are increased.

Based on the technical solution, automatic switching from the first interface to the second interface can be implemented based on the interface jump information and according to the voice instruction given by the user. In this way, a cumbersome operation process of the user is avoided, and this helps improve intelligence of the terminal device. In addition, the display apparatus is controlled to switch from the current interface to the display interface that the user expects to see, instead of enabling the user to find the solution through the learning manual. This helps reduce the learning costs of the user, and helps improve user experience.

In addition, based on the interface jump information of the entire application, all interfaces of the entire application are reachable, and the target interface can be accurately jumped to.

In some possible implementations, the jump path information of the plurality of levels of interfaces includes a jump sequence of the plurality of levels of interfaces and identification information of each interface in the plurality of levels of interfaces, and controlling, according to the first voice instruction and based on first interface jump information, the display apparatus to display the second interface includes: controlling, based on a jump sequence from the first interface to the second interface and the identification information of each interface in a process of jumping from the first interface to the second interface, the display apparatus to switch from displaying the first interface to displaying the second interface.

With reference to the first aspect, in some implementations of the first aspect, controlling, according to the first voice instruction and based on first interface jump information, the display apparatus to display the second interface includes: determining the second interface according to the first voice instruction; determining a first location of the second interface in the jump path information of the plurality of levels of interfaces; determining jump path information from the first interface to the second interface based on a second location of the first interface in the jump path information of the plurality of levels of interfaces, the first location, and the jump path information of the plurality of levels of interfaces; and controlling, based on the jump path information from the first interface to the second interface, the display apparatus to switch from displaying the first interface to displaying the second interface.

Based on the technical solution, the locations of the initial interface and the target interface in the jump path information of the plurality of levels of interfaces can be determined respectively, and then a jump path for switching from the initial interface to the target interface is determined based on the respective locations of the initial interface and the target interface and the jump path information of the plurality of levels of interfaces.

With reference to the first aspect, in some implementations of the first aspect, the plurality of levels of interfaces further include at least one third interface, and controlling, according to the first voice instruction and based on first interface jump information, the display apparatus to display the second interface includes: controlling, according to the first voice instruction and based on first interface jump information, the display apparatus to switch from displaying the first interface to displaying the at least one third interface; and controlling the display apparatus to switch from displaying the at least one third interface to displaying the second interface.

Based on the technical solution, when the second interface indicated by the voice instruction is an interface that cannot be directly jumped to from the currently displayed first interface, switching from the first interface to the at least one third interface can be first implemented based on the interface jump information, and then switching from the at least one third interface to the second interface can be implemented. In this way, the terminal device can implement jumping between two display interfaces that are not directly related, or can implement jumping from the current interface to a display interface with a deep nesting level. This helps improve user experience.

With reference to the first aspect, in some implementations of the first aspect, the jump path information of the plurality of levels of interfaces is indicated by an interaction path of a plurality of interface elements and an operation on each of the plurality of interface elements.

For example, a process of jumping from the first interface to the second interface includes one third interface. The plurality of interface elements include a first interface element and a second interface element. The first interface element is located in the first interface, and the second interface element is located in the third interface. Controlling, according to the first voice instruction and based on first interface jump information, the display apparatus to display the second interface includes: performing an operation on the first interface element in the first interface, to control the display apparatus to switch from displaying the first interface to displaying the third interface; and controlling the display apparatus to switch from displaying the third interface to displaying the second interface includes: performing an operation on the second interface element in the third interface, to control the display apparatus to switch from displaying the third interface to displaying the second interface.

Based on the technical solution, the terminal device can simulate an operation process of the user based on the information about the interaction path of the plurality of interface elements and the operation on each of the plurality of interface elements. In this way, the jump process of the display interfaces can be more human-like, to help further improve user experience.

With reference to the first aspect, the interface jump information may be preset.

With reference to the first aspect, in some implementations of the first aspect, controlling, according to the first voice instruction, the display apparatus to display the second interface corresponding to the first voice instruction includes: inputting information about the first interface and the content of the first voice instruction to a model, to obtain a first interface element and an operation on the first interface element, where the plurality of interface elements include the first interface element; and performing the operation on the first interface element, to control the display apparatus to switch from displaying the first interface to displaying the second interface.

Based on the technical solution, the terminal device obtains the interface jump information (or the interaction path of the interface element) in real time through model inference, so that the display apparatus gradually switches to the target interface, to provide generalization of the application for voice interaction, thereby helping improve the voice interaction experience of the user.

With reference to the first aspect, in some implementations of the first aspect, the second interface is a display interface of a first application, and the method further includes: obtaining the first interface jump information corresponding to the first application.

Based on the technical solution, the terminal device may first obtain the interface jump information corresponding to the first application. In this way, after obtaining the voice instruction, the terminal device may directly perform an interface switching process based on the obtained interface jump information and according to the voice instruction. This can reduce a response delay from obtaining the voice instruction to displaying the second interface by the terminal device, avoid an excessively long time for the user to wait for an interface change, and help improve user experience.

With reference to the first aspect, in some implementations of the first aspect, the first interface jump information is included in a system update data packet sent by a cloud server.

Based on the technical solution, the terminal device may receive the system update data packet sent by the cloud server, where the system update data packet carries second interface jump information for the first application. In this way, during system update, the interface jump information of the first application can be updated in time, so that the terminal device can control the display apparatus to accurately display the target interface.

With reference to the first aspect, in some implementations of the first aspect, the method further includes: sending first request information to a cloud server, where the first request information is used to request interface jump information corresponding to a first version of a second application; and receiving the first interface jump information sent by the cloud server.

Based on the technical solution, after the request information of the terminal device is received, the corresponding interface jump information may be sent to the terminal device based on the association relationship. In this way, the terminal device can receive the interface jump information corresponding to the current version of the second application. The terminal device can perform an interface switching operation according to the voice instruction and based on the interface jump information, to control the display apparatus to display the display interface that the user expects to see. This helps improve the voice interaction experience of the user. For example, the cloud server may store the association relationship between the version of the application and the interface jump information.

In some possible implementations, the first request information includes information about the first version.

In some possible implementations, the cloud server may store correspondences between different versions of the second application and interface jump information. When the first request information is obtained, the interface jump information corresponding to the first version may be searched for based on the correspondence. In this way, the terminal device can obtain, from the cloud server by sending the request information, the first interface jump information corresponding to the current version of the second application, to help, based on the first interface jump information, the user accurately find the display interface that the user expects to view.

In some possible implementations, the first request information may include semantic information corresponding to the first voice instruction, and the first interface jump information may include the jump path information that is from the first interface to the second interface and that corresponds to the semantic information. After receiving the first request information, the cloud server may determine, based on the semantic information and the interface jump information corresponding to the first version, the jump path information that is from the first interface to the second interface and that corresponds to the semantic information, and send the information to the terminal device.

Based on the technical solution, an amount of data sent by the cloud server to the terminal device can be reduced. In addition, the terminal device does not need to analyze the received interface jump information. This helps reduce a delay in a process from obtaining the voice instruction to controlling the display apparatus to display the second interface by the terminal device, and helps improve user experience.

With reference to the first aspect, in some implementations of the first aspect, the method further includes: sending second request information to a cloud server when a third version of a third application does not match the second interface jump information, where the second request information is used to request interface jump information corresponding to the third version; and receiving the first interface jump information sent by the cloud server.

Based on the technical solution, when the version of the third application in the terminal device does not match the interface jump information of the third application, the terminal device may request, from the cloud server, the interface jump information corresponding to the current version of the third application. In this way, when an application in the terminal device is updated and an updated version does not match previous interface jump information, interface jump information corresponding to a latest version may also be correspondingly updated. This helps avoid a case in which the user cannot find, based on the interface jump information corresponding to the old version after giving the voice instruction, the display interface expected by the user, and helps improve user experience.

In some possible implementations, sending the second request information to the cloud server when the third version of the third application does not match the second interface jump information includes: sending the second request information to the cloud server when the third version does not match the second interface jump information and the first voice instruction is obtained.

In some possible implementations, the second request information includes information about the third version.

With reference to the first aspect, in some implementations of the first aspect, the method further includes: updating the second interface jump information based on the first interface jump information.

Based on the technical solution, after the interface jump information for the third version is received from the cloud server, the interface jump information of the third version may be used to update or overwrite the interface jump information corresponding to the previous version, so that the terminal device always stores the interface jump information corresponding to the current version of the application.

With reference to the first aspect, in some implementations of the first aspect, before controlling, according to the first voice instruction and based on first interface jump information, the display apparatus to display the second interface, the method further includes: determining that the first interface jump information includes at least a part of text content corresponding to the first voice instruction.

Based on the technical solution, the terminal device may first determine whether at least the part of the text content corresponding to the voice instruction is included in the first interface jump information. If the voice instruction is included in the first interface jump information, interface switching may be performed based on the first interface jump information. Otherwise, the terminal device may perform an operation for the voice instruction in another manner.

With reference to the first aspect, in some implementations of the first aspect, the first interface and the second interface are interfaces of different applications; and controlling, according to the first voice instruction, the display apparatus to display the second interface corresponding to the first voice instruction includes: controlling, according to the first voice instruction, a first display area of the display apparatus to display the first interface and a second display area of the display apparatus to display the second interface.

Based on the technical solution, when the first interface and the second interface are the display interfaces of different applications, switching from displaying the first interface on a display to displaying the first interface and the second interface in split-screen mode may be performed. For example, the first interface is displayed in the first display area of the display, and the second interface is displayed in the second display area of the display. In this way, a case in which the user cannot view a display interface of a previous application because the display interface of the previous application is overwritten with a display interface of a new application is avoided. This helps improve user experience.

For example, the first interface is a display interface of a vehicle-mounted navigation application, and the second interface is a display interface of a setting application. The first display area keeps displaying the display interface of the vehicle-mounted navigation application, and the second display area displays switching from the display interface of the vehicle-mounted navigation application to the display interface of the setting application, so that a requirement of the user for viewing the display interface of the setting application can be further implemented without affecting viewing navigation information by the user.

In some possible implementations, controlling, according to the first voice instruction, the display apparatus to display the second interface corresponding to the first voice instruction includes: determining, according to the first voice instruction, that the user expects to view the second interface; and when it is determined that the first interface and the second interface are interfaces of different applications, controlling a first display area of the display apparatus to display the first interface and a second display area of the display apparatus to display the second interface.

According to a second aspect, a voice interaction apparatus is provided. The apparatus includes: a control unit, configured to control a display apparatus to display a first interface, where the first interface is a first-level interface; and an obtaining unit, configured to obtain a first voice instruction of a user, where content of the first voice instruction includes content indicating an interface above a second level, where the control unit is further configured to control, according to the first voice instruction, the display apparatus to display a second interface corresponding to the first voice instruction, where the second interface is the interface above the second level.

With reference to the second aspect, in some implementations of the second aspect, the second interface is an interface of a setting application, a video application, a music application, or a driver's guide application.

With reference to the second aspect, in some implementations of the second aspect, the control unit is configured to control, according to the first voice instruction, the display apparatus to display at least one third interface and then display the second interface.

With reference to the second aspect, in some implementations of the second aspect, the control unit is further configured to control the display apparatus to display jump progress in the first interface and/or the second interface.

With reference to the second aspect, in some implementations of the second aspect, the control unit is configured to control, according to the first voice instruction and based on first interface jump information, the display apparatus to display the second interface, where the first interface jump information includes jump path information of a plurality of levels of interfaces, and the plurality of levels of interfaces include the first interface and the second interface.

With reference to the second aspect, in some implementations of the second aspect, the jump path information of the plurality of levels of interfaces is indicated by an interaction path of a plurality of interface elements and an operation on each of the plurality of interface elements.

With reference to the second aspect, in some implementations of the second aspect, the obtaining unit is configured to input information about the first interface and the content of the first voice instruction to a model, to obtain a first interface element and an operation on the first interface element, where the plurality of interface elements include the first interface element.

With reference to the second aspect, in some implementations of the second aspect, the second interface is a display interface of a first application; and the obtaining unit is further configured to obtain the first interface jump information corresponding to the first application.

With reference to the second aspect, in some implementations of the second aspect, the apparatus further includes: a receiving unit, configured to receive a system update data packet sent by a cloud server, where the system update data packet includes updated second interface jump information of the first application.

With reference to the second aspect, in some implementations of the second aspect, the apparatus further includes: a sending unit, configured to send first request information to a cloud server according to the first voice instruction, where the first request information is used to request interface jump information corresponding to a first version of a second application; and a receiving unit, configured to receive the first interface jump information sent by the cloud server.

With reference to the second aspect, in some implementations of the second aspect, the apparatus further includes: a sending unit, configured to send second request information to a cloud server when a third version of a third application does not match the second interface jump information, where the second request information is used to request interface jump information corresponding to the third version; and a receiving unit, configured to receive the first interface jump information sent by the cloud server. For example, a terminal device stores an association relationship between the version of the third application and the interface jump information.

With reference to the second aspect, in some implementations of the second aspect, the first interface and the second interface are interfaces of different applications; and the control unit is configured to control, according to the first voice instruction, a first display area of the display apparatus to display the first interface and a second display area of the display apparatus to display the second interface.

According to a third aspect, a voice interaction apparatus is provided. The apparatus includes a processing unit and a storage unit. The storage unit is configured to store instructions, and the processing unit executes the instructions stored in the storage unit, so that the apparatus performs any possible method according to the first aspect.

According to a fourth aspect, a system is provided. The system includes a display apparatus and a computing platform. The computing platform includes any possible apparatus according to the second aspect or the third aspect.

According to a fifth aspect, a terminal device is provided. The terminal device includes any possible apparatus according to the second aspect or the third aspect, or includes the system according to the fourth aspect.

In some possible implementations, the terminal device may be a vehicle.

According to a sixth aspect, a computer program product is provided. The computer program product includes computer program code, and when the computer program code is executed by one or more processors, a terminal device is enabled to perform any possible method according to the first aspect.

It should be noted that all or a part of the computer program code may be stored in a first storage medium. The first storage medium may be encapsulated together with a processor, or may be encapsulated separately from a processor. This is not specifically limited in this embodiment of this application.

According to a seventh aspect, a computer-readable storage medium is provided. The computer-readable storage medium stores program code, and when the computer program code is executed by one or more processors, a terminal device is enabled to perform any possible method according to the first aspect.

According to an eighth aspect, an embodiment of this application provides a chip system. The chip system includes a processor configured to invoke a computer program or computer instructions stored in a memory, to enable the processor to perform any possible method according to the first aspect.

With reference to the eighth aspect, in a possible implementation, the processor is coupled to the memory through an interface.

With reference to the eighth aspect, in a possible implementation, the chip system further includes the memory, and the memory stores the computer program or the computer instructions.

### BRIEF DESCRIPTION OF DRAWINGS

FIG. 1 is a functional block diagram of a terminal device according to an embodiment of this application;
FIG. 2(a) to FIG. 2(d) show a group of graphical user interfaces GUIs according to an embodiment of this application;
FIG. 3(a) to FIG. 3(e) show another group of GUIs according to an embodiment of this application;
FIG. 4(a) and FIG. 4(b) show still another group of GUIs according to an embodiment of this application;
FIG. 5 is a diagram of a system architecture according to an embodiment of this application;
FIG. 6 is a diagram of a layout tree stored in a large language model LLM according to an embodiment of this application;
FIG. 7 is another diagram of a layout tree stored in an LLM according to an embodiment of this application;
FIG. 8 is a schematic flowchart of a voice interaction method according to an embodiment of this application;
FIG. 9 is a block diagram of a voice interaction apparatus according to an embodiment of this application; and
FIG. 10 is a block diagram of a chip according to an embodiment of this application.

### DESCRIPTION OF EMBODIMENTS

The following describes technical solutions in embodiments of this application with reference to accompanying drawings in embodiments of this application. In description in embodiments of this application, "/" means "or" unless otherwise specified. For example, A/B may indicate A or B. "And/or" in this specification merely describes an association relationship between associated objects, and indicates that three relationships may exist. For example, A and/or B may indicate the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

In embodiments of this application, prefix words such as "first" and "second" are used only to distinguish between different described objects, and do not limit locations, a sequence, priorities, quantities, content, or the like of the described objects. Use of prefix words such as ordinal numbers used to distinguish between the described objects in embodiments of this application does not constitute a limitation on the described objects. For descriptions of the described objects, refer to the context descriptions in the claims or embodiments. The use of such prefix words should not constitute a redundant limitation. In addition, in the descriptions of embodiments, unless otherwise specified, "a plurality of" means two or more.

The following describes a terminal device, a graphical user interface (graphical user interface, GUI) used for such a terminal device, and embodiments for using such a terminal device. In some embodiments, the terminal device may be a mobile phone, a tablet computer, a wearable electronic device (for example, a smart watch) having a wireless communication function, a vehicle, a vehicle-mounted domain controller (for example, a computing platform, a cockpit domain controller, or a vehicle domain controller), a vehicle-mounted terminal, or the like. An example embodiment of the terminal device includes but is not limited to a device running iOS^{®}, Android^{®}, Microsoft^{®}, HarmonyOS, or another operating system.

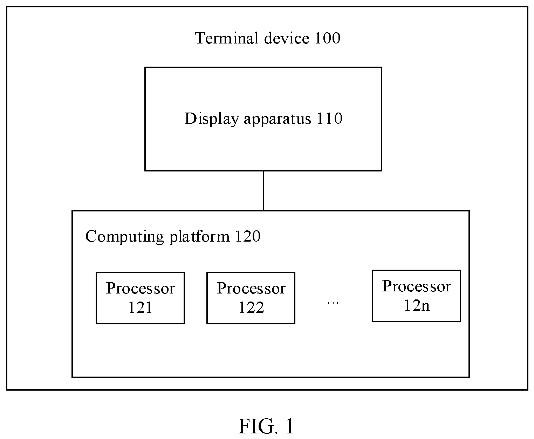

FIG. 1 is a functional block diagram of a terminal device 100 according to an embodiment of this application. The terminal device 100 may include a display apparatus 110 and a computing platform 120.

Some or all functions of the terminal device 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may achieve a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Moreover, the computing platform 120 may further include a memory. The memory is configured to store instructions, and some or all of the processors 121 to 12n may invoke the instructions in the memory, to implement a corresponding function.

For example, the terminal device 100 is a vehicle. Display apparatuses 110 in a vehicle cockpit are mainly classified into two types. A first type is a vehicle-mounted display, and a second type is a projection display, for example, a head-up display (head up display, HUD). The vehicle-mounted display is a physical display, and is an important part of an in-vehicle infotainment system. A plurality of displays may be disposed in the cockpit, for example, a digital dashboard display, a central control display, a display in front of a passenger at a front passenger seat (also referred to as a front-row passenger), a display in front of a rear-row left-side passenger, and a display in front of a rear-row right-side passenger. Even a vehicle window may also be used as a display for display. The head-up display is also referred to as a head-up display system. The head-up display is mainly configured to display driving information such as a speed and navigation on a display device (for example, a windshield) in front of a driver, to reduce line-of-sight transfer time of the driver, avoid a pupil change caused by the line-of-sight transfer of the driver, and improve driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

The display apparatus 110 is described by using the vehicle-mounted display and the projection display as examples. Embodiments of this application are not limited thereto. For example, the display apparatus 110 may alternatively be a light display or a projection screen.

The following GUI is described by using an example in which the terminal device 100 is a vehicle.

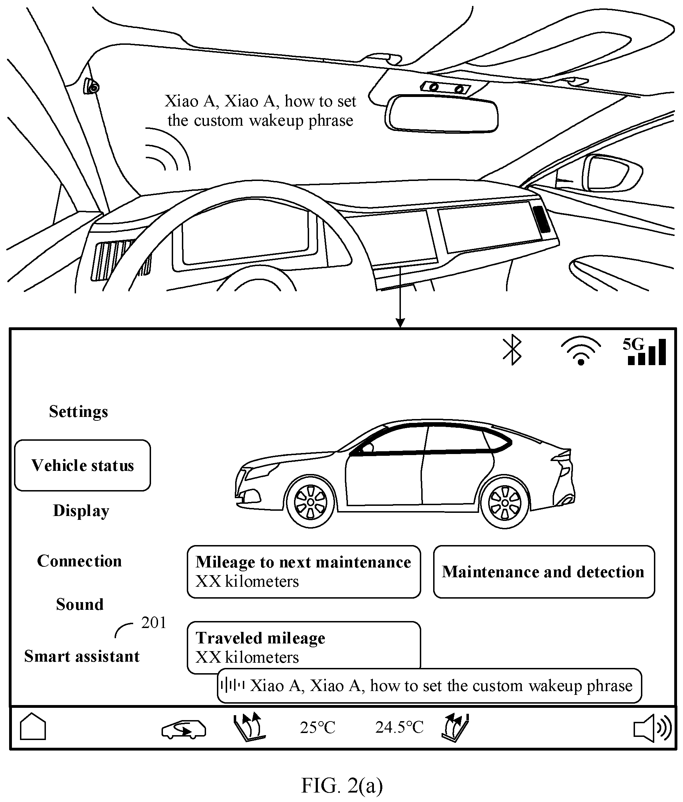

For example, FIG. 2(a) to FIG. 2(d) show a group of GUIs according to an embodiment of this application.

A GUI shown in FIG. 2(a) is a setting interface of a vehicle. A left side of the setting interface includes a plurality of tabs, for example, a vehicle status tab, a display tab, a connection tab, a sound tab, and a smart assistant tab. Function descriptions of a tab are included on the right of the setting interface. For example, as shown in FIG. 2(a), when the setting interface is initially entered, the vehicle may display a display interface of the vehicle status tab on a display.

The setting interface of the vehicle shown in FIG. 2(a) may also be understood as the display interface of the vehicle status tab.

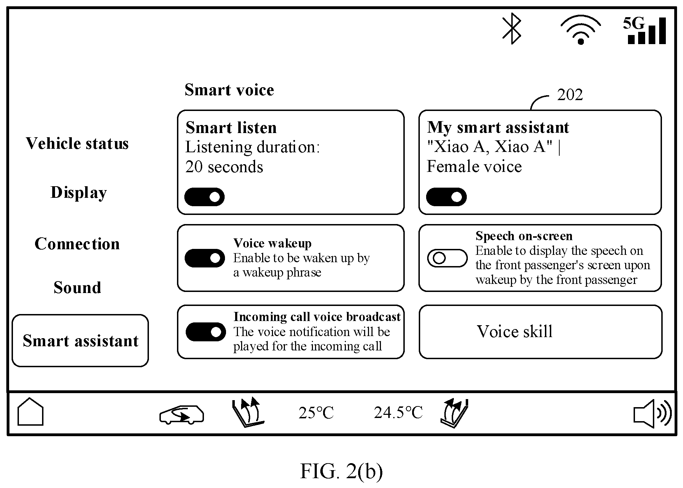

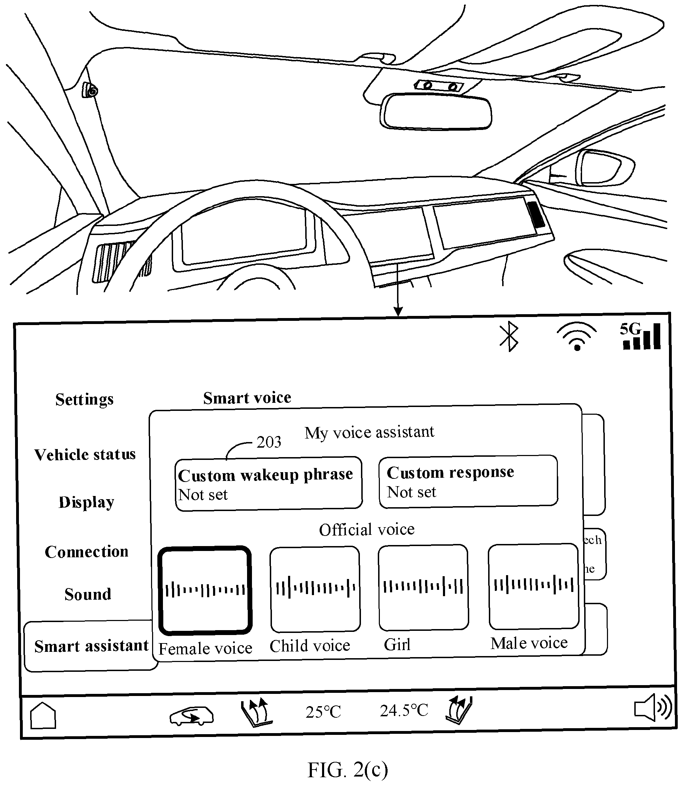

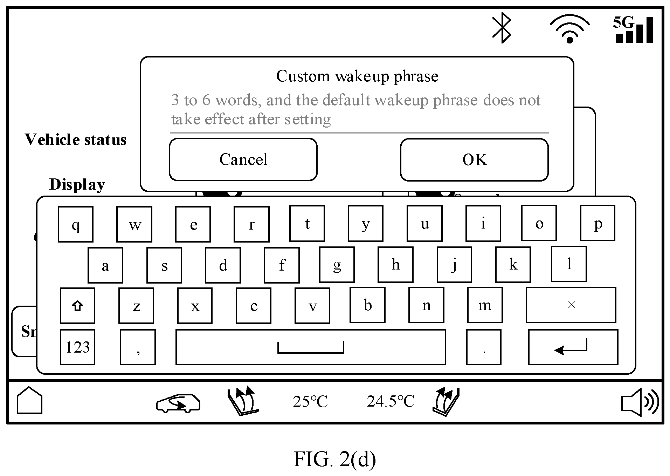

When it is detected that a user gives a voice instruction "Xiao A, Xiao A, how to set the custom wakeup phrase", the vehicle may perform speech-to-text content conversion on the voice instruction, and recognize an intent of the user based on the text content, to determine that the intent of the user is to set a wakeup phrase of a voice assistant. The vehicle may control the display to switch from displaying the display of the vehicle status tab to displaying a display interface of the smart assistant tab shown in FIG. 2(b), from displaying the display interface of the smart assistant tab to displaying a display interface of a my smart assistant tab shown in FIG. 2(c), and from displaying the display interface of the my smart assistant tab to displaying a display interface for entering a custom wakeup phrase shown in FIG. 2(d).

In an embodiment, the vehicle may control, based on locally stored interface jump information and according to the voice instruction of the user, the display to implement switching from FIG. 2(a) to FIG. 2(d).

For example, the interface jump information may include jump path information of a plurality of levels of interfaces.

In an embodiment, the jump path information of the plurality of levels of interfaces may include jump path information of a plurality of levels of interfaces of a same application.

For example, a setting application is used as an example. Jump path information of a plurality of levels of interfaces in the setting application includes jump path information of an interface 1-an interface 2-an interface 3-an interface 4. The interface 1 may be the display interface of the vehicle status tab, the interface 2 may be the display interface of the smart assistant tab, the interface 3 may be the display interface of the my smart assistant tab, and the interface 4 may be the display interface for entering the custom wakeup phrase.

For another example, the jump path information of the plurality of levels of interfaces of the setting application further includes interaction path information of the interface 1-an interface 5-an interface 6. The interface 1 may be the display interface of the vehicle status tab, the interface 5 may be a display interface of a maintenance and detection subtab, and the interface 6 may be a display interface of a wiper detection and maintenance mode.

In an embodiment, the jump path information of the plurality of levels of interfaces may include jump path information of a plurality of levels of interfaces of different applications.

For example, the plurality of applications may include a music application and a setting application. The jump path information of the plurality of levels of interfaces of different applications includes an interface 7-a desktop-an interface 1-an interface 2-an interface 3-an interface 4. The interface 7 is any display interface of the music application.

For example, Table 1 shows interface jump information provided in embodiments of this application.

**Table 1**

| First-level interface | Second-level interface | Third-level interface |
|---|---|---|
| Display interface of a vehicle status tab | Display interface of a maintenance and detection subtab | Display interface of a wiper detection and maintenance mode |
| | | Display interface of a fuel detection and maintenance mode |
| | | ... |
| | Display interface for entering a mileage to next maintenance | Absent |
| | ... | ... |
| Display interface of a smart assistant tab | Display interface of a my smart assistant tab | Display interface for entering a custom wakeup phrase |
| | | Display interface for entering a custom response |
| | | ... |
| | ... | ... |
| ... | ... | ... |

The first-level interface may be a display interface displayed when the vehicle obtains the voice instruction of the user, the second-level interface may be an interface displayed after one jump from the first-level interface, and an interface above the second level may be an interface displayed after at least two jumps from the first-level interface. For example, the third-level interface may be an interface displayed after two jumps from the first-level interface.

For example, the jump path information of the plurality of levels of interfaces may be indicated by an interaction path of a plurality of interface elements. The interface element may include an interface element that can respond to an operation, for example, a control like a tab, a key, a progress bar, or a slider bar in an interface.

The smart assistant tab is used as an example. The display interface of the smart assistant tab may include a plurality of subtabs, and the plurality of subtabs include a smart listen tab, the my smart assistant tab, a voice wakeup tab, a speech on-screen tab, an incoming call voice broadcast tab, a voice skill tab, and the like. A next-level display interface associated with the my smart assistant tab may include a custom wakeup phrase control, a custom response control, and a plurality of sound mode selection controls. The custom wakeup phrase control is associated with the display interface for entering the custom wakeup phrase.

For example, the interaction path of the plurality of interface elements may be the smart assistant tab-the my smart assistant tab-the custom wakeup phrase control. The interaction path of the plurality of interface elements may indicate the jump path information of the interface 1-the interface 2-the interface 3-the interface 4.

For example, in the interface 1 shown in FIG. 2(a), the vehicle may simulate that the user taps a smart assistant tab 201, to display, on the display, the interface 2 shown in FIG. 2(b).

For example, in the interface 2 shown in FIG. 2(b), the vehicle may simulate that the user taps a my smart assistant tab 202 in the interface 2, to display, on the display, the interface 3 shown in FIG. 2(c).

For example, in the interface 3 shown in FIG. 2(c), the vehicle may simulate that the user taps a custom wakeup phrase control 203 in the interface 3, to display, on the display, the interface 4 shown in FIG. 2(d).

In an embodiment, after switching from the interface 1 to the interface 4 on the display, the vehicle may further display prompt information "you can enter a custom wakeup phrase here" in the interface 4 and perform voice broadcast.

In an embodiment, if the voice instruction given by the user is "Xiao A, Xiao A, how to set the custom wakeup phrase of the male voice", the vehicle may simulate that the user first taps male voice in official voice in the interface 3, and then simulate that the user taps the custom wakeup phrase control 203 in the interface 3, to display the interface 4 on the display.

In an embodiment, in a process of switching from the interface 1 to the interface 4, progress of switching from an initial interface to a target interface may be further displayed in each interface. This helps improve interactivity with the user, thereby helping improve user experience.

In an embodiment, displaying the progress from the initial interface to the target interface includes: displaying a quantity of display interfaces that need to be switched in a process of switching from the initial interface to the target interface and a sequence number of a current display interface in the switching process.

For example, prompt information "display interface switching needs to be performed three times to switch to the display interface for entering the custom wakeup phrase, and a 1^{st} display interface is currently being displayed" may be displayed in the interface 1 shown in FIG. 2(a).

For another example, prompt information "display interface switching needs to be performed three times to switch to the display interface for entering the custom wakeup phrase, and a 2^{nd} display interface is currently being displayed" may be displayed in the interface 2 shown in FIG. 2(b).

For another example, prompt information "display interface switching needs to be performed three times to switch to the display interface for entering the custom wakeup phrase, and a 3^{rd} display interface is currently being displayed" may be displayed in the interface 3 shown in FIG. 2(c).

For another example, prompt information "display interface switching needs to be performed three times to switch to the display interface for entering the custom wakeup phrase, and a 4^{th} display interface is currently being displayed" may be displayed in the interface 4 shown in FIG. 2(d).

In an embodiment, in a process of jumping between the plurality of levels of interfaces, duration of switching between adjacent interfaces may be first preset duration. For example, the first preset duration may be 500 ms.

In an embodiment, in the process of jumping between the plurality of levels of interfaces, total duration of switching from the current interface to the target interface is second preset duration.

For example, the second preset duration 3s. Switching from the interface 1 to the interface 4 is used as an example. After it is determined that the quantity of jumps is 3, jump duration between every two adjacent interfaces is 1s. For another example, if it is determined, according to the voice instruction and based on the interface jump information, that five interface jumps need to be performed, jump duration between adjacent interfaces may be 600 ms. This helps avoid excessively long total jump duration, and also helps avoid excessively long waiting duration of the user.

In an embodiment, after obtaining the voice instruction of the user, the vehicle may control, based on the interface jump information and according to the voice instruction, the display to perform interface switching; or may control, in a manner of combining the interface jump information with another interface switching manner, the display to perform interface switching. For example, the another interface switching manner is a deeplink (deeplink) technology. In the deeplink technology, switching from an interface to another interface may be implemented by using a uniform resource identifier (uniform resource identifier, URI). The vehicle may switch from the current interface to an interface closest to the target interface with reference to the deeplink technology, and then switch from the interface closest to the target interface to the target interface based on the interface jump information.

For example, the interface jump information includes jump path information of an interface 1-an interface 8-an interface 9-an interface 10, and switching from the interface 1 to the interface 9 may be implemented by using the deeplink technology. When controlling the display to display the interface 1, the vehicle obtains a voice instruction instructing to display the interface 10, the vehicle may first control, by using the deeplink technology, the display to switch from displaying the display interface 1 to displaying the display interface 9, and then control, based on the interface jump information, the display to switch from displaying the display interface 9 to displaying the display interface 10. In this way, it can be ensured that a quantity of jumps from the current interface to the target interface is the smallest, so that the user can view the target interface in time. This helps improve user experience.

In this embodiment of this application, according to the voice instruction entered by the user and the interface jump information, the vehicle may control the display to first jump from the initial setting interface to the display interface of the smart assistant tab, then jump from the display interface of the smart assistant tab to the display interface of the my smart assistant tab, and finally jump from the display interface of the my smart assistant tab to the display interface for entering the custom wakeup phrase. Therefore, by giving the voice instruction once, jumping from the current interface to the interface with a deep nesting level can be implemented, thereby eliminating cumbersome operation and learning processes of the user, and helping improve voice interaction experience of the user.

In addition, the target interface is accurately found based on the interface jump information, so that an interface range that can be reached through voice interaction can be expanded, and the user can be prevented from performing step-by-step search, thereby improving interaction convenience. In addition, the user may be further guided to learn of a location of the target interface, especially for a user who is unfamiliar with a system or an application, thereby helping improve user experience.

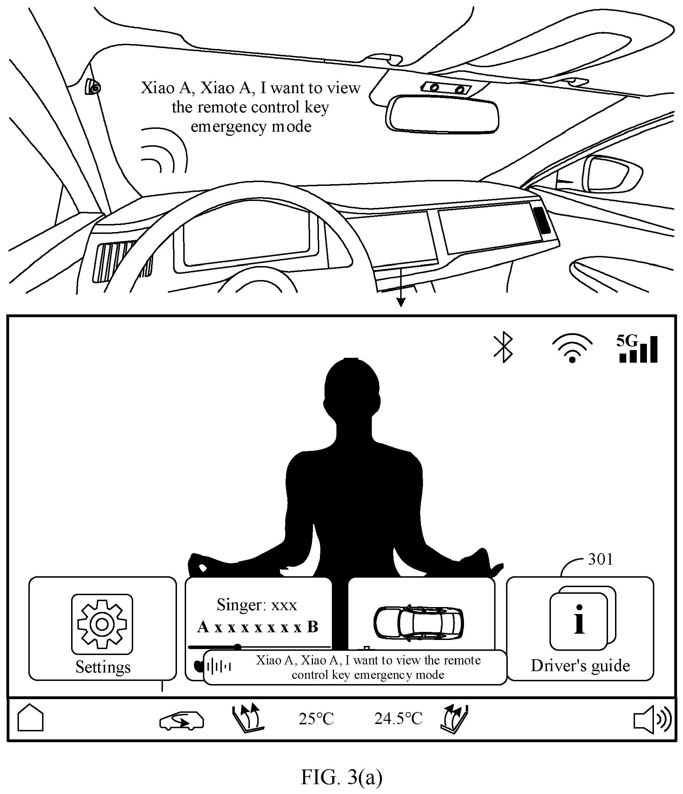

For example, FIG. 3(a) to FIG. 3(e) show a group of GUIs according to an embodiment of this application.

A GUI shown in FIG. 3(a) is a desktop of a vehicle. The desktop includes a plurality of cards, for example, a card corresponding to settings, a card corresponding to a music application, a card corresponding to a remaining battery level and mileage of the vehicle, and a card 301 corresponding to a driver's guide.

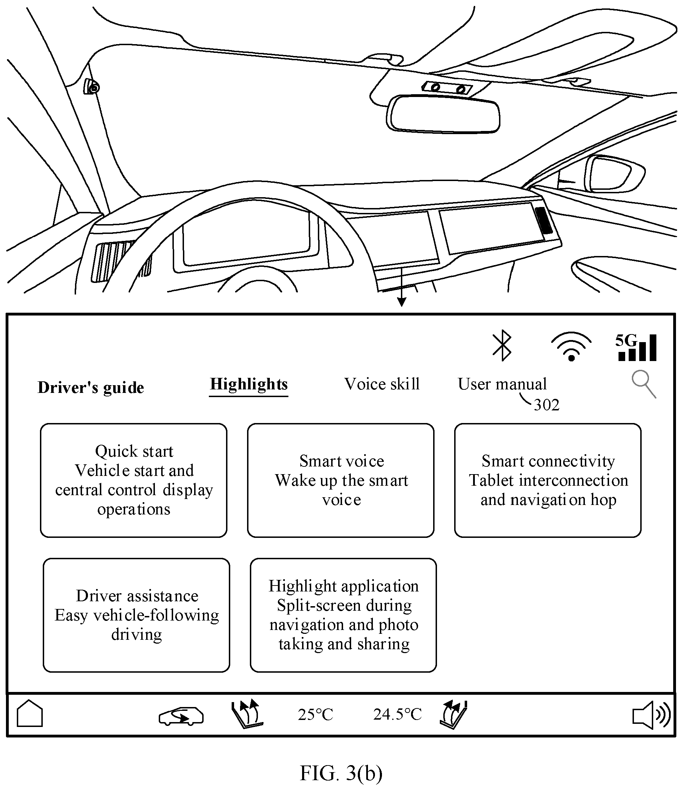

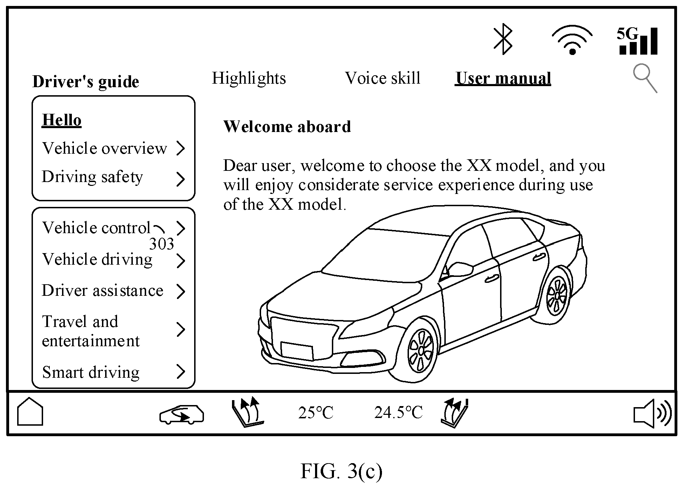

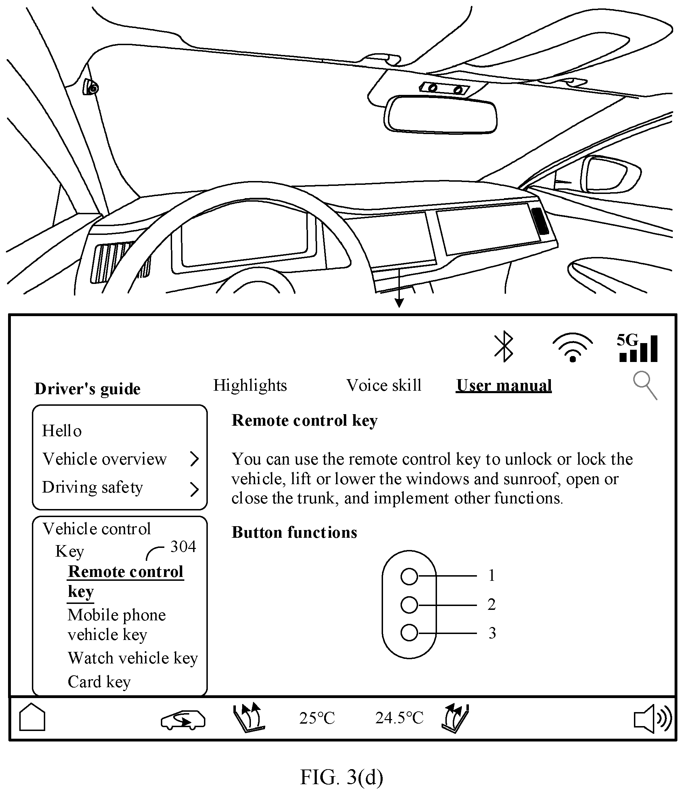

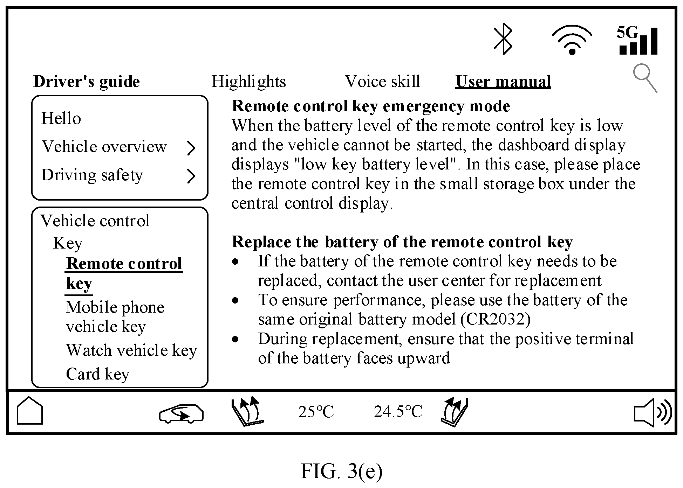

When it is detected that a user gives a voice instruction "Xiao A, Xiao A, I want to view the emergency mode of the remote control key emergency mode", the vehicle may perform speech-to-text content conversion on the voice instruction, and recognize an intent of the user based on the text content, to determine that the intent of the user is to view description content corresponding to the remote control key emergency mode in a user manual. The vehicle may switch, on a display, from displaying the desktop to displaying an initial interface of the driver's guide application shown in FIG. 3(b), from displaying the initial interface of the driver's guide application to displaying a display interface of a user manual tab 302 shown in FIG. 3(c), from displaying the display interface of the user manual tab 302 to displaying a display interface of a remote control key tab 304 shown in FIG. 3(d), and from displaying the display interface of the remote control key tab 304 to displaying a display interface of the description content of the remote control key emergency mode shown in FIG. 3(e).

In an embodiment, the vehicle may control, based on interface jump information and according to the voice instruction of the user, the display to implement switching from FIG. 3(a) to FIG. 3(e).

For example, Table 2 shows another type of interface jump information provided in embodiments of this application.

**Table 2**

| First-level interface | Second-level interface | Third-level interface | Fourth-level interface | Fifth-level interface |
|---|---|---|---|---|
| | Display interface of a highlights tab | Display interface of a quick start tab | ... | ... |
| | | Display interface of a smart voice tab | ... | ... |
| | | ... | ... | ... |
| | Display interface of a user manual tab | Display interface of a vehicle control tab | Display interface of a key tab | Display interface of a remote control key tab |
| | | | | Display interface of a mobile phone vehicle key tab |
| Desktop | | | | Display interface of a watch vehicle key tab |
| | | | | Display interface of a card key tab |
| | | | | ... |
| | | | Display interface of a vehicle door tab | ... |
| | | Display interface of a driving safety tab | ... | ... |
| | | ... | ... | ... |
| | ... | ... | ... | ... |
| ... | ... | ... | ... | ... |

The foregoing is described by using an example in which the first-level display interface is the desktop shown in FIG. 3(a). Content of the voice instruction given by the user includes content indicating a sixth-level display interface (for example, the display interface of the remote control key emergency mode, which is not shown in Table 2). If the terminal device displays the display interface of the vehicle control tab when receiving the voice instruction of the user, the display interface of the vehicle control tab may be the first-level display interface, and the content of the voice instruction given by the user includes content indicating the fifth-level display interface (for example, the display interface of the remote control key emergency mode, which is not shown in Table 2).

Division into interfaces at different levels in Table 2 is merely an example. Embodiments of this application are not limited thereto. For example, the interface jump information may alternatively not include the display interface of the key tab and the display interface of the vehicle door tab. In this case, the display interface of the remote control key tab may be referred to as the fourth-level interface, and the interface of the description content of the remote control key emergency mode may be referred to as the fifth-level interface.

The driver's guide application includes a plurality of tabs, for example, a highlights tab, a voice skill tab, and the user manual tab 302. The highlights tab includes the quick start tab, the smart voice tab, a smart connectivity tab, a driver assistance tab, and a highlight application tab. The user manual tab includes a vehicle overview tab, the driving safety tab, a vehicle control tab 303, a vehicle driving tab, a driver assistance tab, a travel and entertainment tab, and a smart driving tab. The vehicle control tab 303 includes the key tab and the vehicle door tab. The key tab includes the remote control key tab 304, the mobile phone vehicle key tab, the watch vehicle key tab, and the card key tab. Description content corresponding to the remote control key tab includes description content of button functions, the description content of the remote control key emergency mode, and description content of replacing a battery of the remote control key.

For example, the interface jump information may include information about an interaction path of a plurality of interface elements, and the interaction path of the plurality of interface elements includes the driver's guide application icon 301-the user manual tab 302-the vehicle control tab 303-the remote control key tab 304-a preset point (or a progress bar) in the display interface. The interaction path of the plurality of interface elements may indicate jump path information of the desktop-the initial interface of the driver's guide application-the display interface of the user manual tab-the display interface of the remote control key tab-the display interface of the description content of the remote control key emergency mode.

In the desktop shown in FIG. 3(a), the vehicle may simulate that the user taps the driver's guide application icon 301, to display, on the display, the initial interface of the driver's guide application or the display interface of the highlights tab in the driver's guide application shown in FIG. 3(b).

In the interface shown in FIG. 3(b), the vehicle may simulate that the user taps the user manual tab 302, to display, on the display, the display interface of the user manual tab 302 shown in FIG. 3(c).

In the interface shown in FIG. 3(c), the vehicle may simulate that the user taps the remote control key tab 304 in the vehicle control tab 303, to display, on the display, the display interface of the remote control key tab 304 shown in FIG. 3(d).

The switching process from FIG. 3(c) and FIG. 3(d) is merely an example. The vehicle control tab 303 may include the key tab, the vehicle door tab, and the like. The key tab may include the remote control key tab, the mobile phone vehicle key tab, the watch vehicle key tab, the card key tab, and the like. For example, the vehicle may first simulate that the user taps the vehicle control tab 303, to display, on the display, an expanded display interface of the vehicle control tab 303. The expanded display interface of the vehicle control tab 303 includes the key tab and the vehicle door tab (in this case, the key tab 304 is in a non-expanded state). The vehicle may then simulate that the user taps the key tab 304, to display, on the display, the display interface of the remote control key tab 304 shown in FIG. 3(d).

In the interface shown in FIG. 3(d), the vehicle may simulate a sliding operation performed by the user at a point in the display interface or a sliding operation performed on a progress bar, to display, on the display, the description content of the remote control key emergency mode shown in FIG. 3(e).

In this embodiment of this application, the voice instruction given by the user can help the user accurately find a display interface with a deep nesting level, for example, a display interface of description content for a function in the driver's guide. In this way, the user does not need to search for description content of a corresponding function in the large and complex driver's guide. This helps improve user experience.

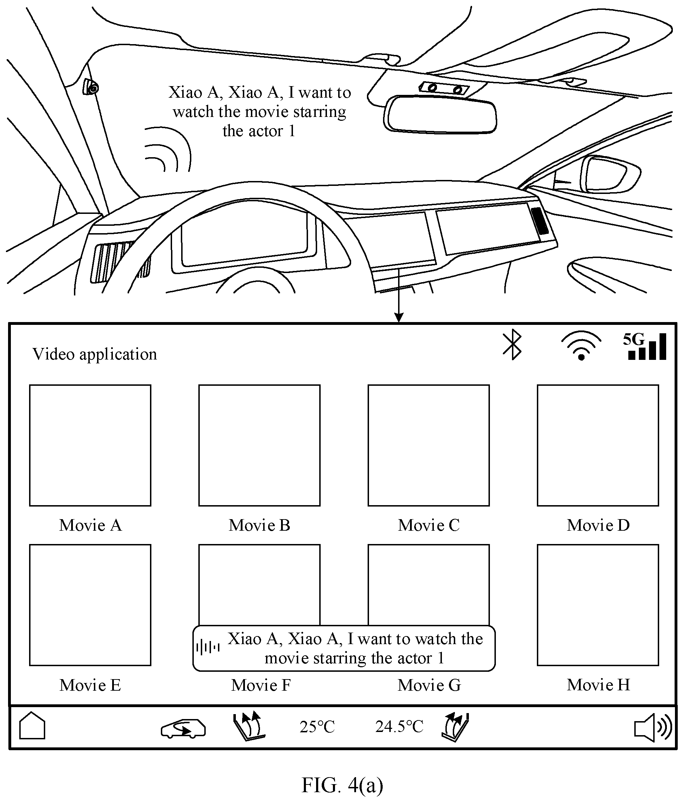

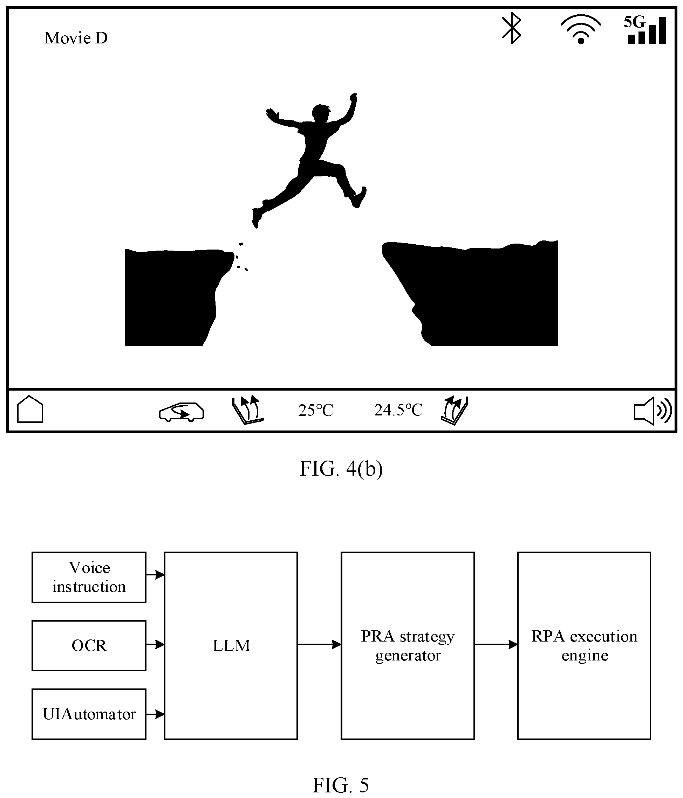

For example, FIG. 4(a) and FIG. 4(b) show a group of GUIs according to an embodiment of this application.

A GUI shown in FIG. 4(a) is a display interface of a video application, and the display interface includes information about "Movie A" to "Movie H".

The GUI shown in FIG. 4(a) may alternatively be an initial display interface of the video application.

When it is detected that a user gives a voice instruction "Xiao A, Xiao A, I want to watch the movie starring the actor 1", a vehicle may perform speech-to-text content conversion on the voice instruction, and recognize an intent of the user based on the text content, to determine that the intent of the user is to watch the movie starring the actor 1. The vehicle may control, based on the intent of the user, a display to switch from displaying the initial display interface of the video application to displaying a video playing interface of the "Movie D" shown in FIG. 4(d).

In an embodiment, the vehicle may send request information to a cloud server, where the request information is used to request interface jump information of the video application. After the interface jump information sent by the cloud server is received, switching from FIG. 4(a) and FIG. 4(b) may be performed according to the voice instruction of the user and based on the interface jump information.

For example, the cloud server may analyze display interfaces at different levels in the video application, to obtain jump path information of a plurality of levels of interfaces in the video application. For example, the cloud server may analyze poster information (for example, movie poster information includes a leading actor list, a plot overview, and a movie type) corresponding to each movie, to determine the interface jump information of the video application. The interface jump information may include a correspondence between a name of a movie and poster information.

The foregoing is described by using an example in which the cloud server analyzes the display interfaces at different levels in the video application to obtain the interface jump information. Embodiments of this application are not limited thereto. The vehicle may analyze the display interfaces at different levels in the video application, to obtain the jump path information of the plurality of levels of interfaces in the video application. For example, the vehicle may dynamically capture, in a screenshot manner, content displayed on the screen, to obtain the poster information corresponding to each movie and determine the correspondence between the name of the movie and the poster information.

For example, Table 3 shows still another type of interface jump information provided in embodiments of this application.

**Table 3**

| Movie name | Leading actor list | Plot overview | Movie type | ... |
|---|---|---|---|---|
| Movie A | Actor 4, actor 5, actor 6... | Overview 1 | Kids/Animation | ... |
| Movie B | Actor 7, actor 8, actor 9... | Overview 2 | Thriller | ... |
| Movie C | Actor 10, actor 11, actor 12... | Overview 3 | Actions | ... |
| Movie D | Actor 1, actor 2, actor 3... | Overview 4 | Comedy | ... |
| ... | ... | ... | ... | ... |

When determining, based on the interface jump information and according to the voice instruction of the user, that the user wants to watch the "Movie D", the vehicle may control the display to display the video playing interface of the "Movie D" shown in FIG. 4(b).

FIG. 5 is a diagram of a system architecture according to an embodiment of this application. As shown in FIG. 5, the system architecture includes a large language model (large language model, LLM), a robot process automation (robotic process automation, RPA) strategy generator, and an RPA execution engine.

For example, layout (layout) information of each display interface forms interface jump information through UIAutomator testing, optical character recognition (optical character recognition, OCR), and the like. When receiving a voice instruction of a user, a vehicle may input the voice instruction and the interface jump information to the LLM. The LLM may output, to the RPA strategy generator according to the entered voice instruction and based on interface jump information, jump path information of a plurality of levels of interfaces for jumping from a current interface to a target interface, and a representation format of the jump path information may be a JSON string. The RPA strategy generator may generate a combined instruction based on the jump path information output by the LLM, and send the combined instruction to the RPA execution engine. The RPA execution engine may execute the combined instruction, to make the vehicle simulate a user operation, so as to control a display to switch from displaying the current interface to displaying the target interface.

The UIAutomator may be configured to obtain a plurality of interface elements in one interface and an operation on each of the plurality of interface elements. An interaction path between different interfaces and an interaction path between interface elements in different interfaces may be obtained by using another test tool or script. For example, the current interface and one or more next interfaces that are reached after an operation is performed on at least one interface element of the current interface may be obtained by using the test tool or the script, to establish jump path information from the current interface -the one or more next interfaces.

The foregoing is described by using an example in which the test tool tests the interaction path of the interface elements in different interfaces. Embodiments of this application are not limited thereto. The interaction path of the interface elements in different interfaces may alternatively be obtained through model inference. The following uses a model training phase and a model inference phase for description.

### Model training phase

For example, page layout information of different interfaces in a video application 1 may be used to train a model. In a model training process, the model may be trained based on labeled data. The labeled data may include a labeled interface (that is, each interface element in the interface is labeled with an identifier, where the identifier indicates that the interface element can respond to an operation on the interface, the identifier may be represented as a number, a string, or the like, and each interface element corresponds to a different identifier), text content (text content corresponding to a voice instruction), a target interface element, and an operation on the target interface element used as a true value in the video application 1. For example, the labeled data may include a home page of the video application 1, text content "open my recently watched video", and corresponding true values being a "me" tab on the home page of the video application 1 and a tap operation on the "me" tab. For another example, the labeled data may alternatively include a display interface of a "me" tab, text content "open my recently watched video", and corresponding true values being a viewing history control in the display interface of the "me" tab and a tap operation on the viewing history control. For another example, the labeled data may alternatively include a display interface of a historical record corresponding to a viewing history control, text content "open my recently watched video", and corresponding true values being a 1^{st} result in the historical record and a tap operation on the 1^{st} result. The model may be trained based on the labeled data. After the model is trained, the model may be deployed on a terminal device.

### Model inference phase

For example, after obtaining a voice instruction of a user, the terminal device may convert the voice instruction into text content and label a current interface, for example, allocate an identifier to each interface element in the current interface (for example, an interface a). After labeling is completed, the terminal device may input the labeled current interface and the text content to the model, to obtain a target interface element and an operation on the target interface element through model inference. The terminal device may perform the operation on the target interface element in the interface a, to control a display to jump to a next interface (for example, an interface b) of the current interface.

The terminal device may label the interface b. After labeling is completed, the terminal device may input the labeled interface b and the text content to the model, to obtain another target interface element and an operation on the another target element through model inference. The terminal device may perform the operation on the another target interface element in the interface b, to control the display to jump to a next-level interface (for example, an interface c) of the interface b. By analogy, the terminal device may control the display to jump to a display interface that the user expects to see.

For example, when displaying a home page of a video application 2, the terminal device obtains a voice instruction "play the video I watched earlier" of a user. The terminal device may label the home page of the video application 2. After labeling is completed, the terminal device may input, to the model, the labeled home page of the video application 2 and text content corresponding to the voice instruction, to obtain a "me" tab on the home page of the video application 2 and a tap operation on the "me" tab through model inference. The terminal device may perform the tap operation on the "me" tab, to control the display to switch from displaying the home page of the video application 2 to displaying a display interface of the "me" tab. The terminal device may label the display interface of the "me" tab. After labeling is completed, the terminal device may input the labeled display interface of the "me" tab and the text content to the model, to obtain a viewing history control in the display interface of the "me" tab and a tap operation on the viewing history control through model inference. The terminal device may perform the tap operation on the viewing history control, to control the display to switch from displaying the display interface of the "me" tab to displaying a display interface of a viewing historical record. The terminal device may label the display interface of the viewing historical record. After labeling is completed, the terminal device may input the display interface of the viewing historical record and the text content to the model, to obtain 1^{st} video content in the display interface of the viewing history record and a tap operation on the 1^{st} video content. The terminal device may perform the tap operation on the 1^{st} video content, to control the display to switch from displaying the display interface of the viewing historical record to displaying a playing interface of the 1^{st} video.

For example, the terminal device obtains a voice instruction "send the file B to the user A" of a user on a home page of a social application. The terminal device may label the home page of the social application. After labeling is completed, the terminal device may input, to the model, the labeled home page of the social application and text content corresponding to the voice instruction, to obtain a chat bar with the user A on the home page of the social application and a tap operation on the chat bar through model inference. The terminal device may perform the tap operation on the chat bar, to control the display to switch from displaying the home page of the social application to displaying a chat interface with the user A. The terminal device may label the chat interface with the user A. After labeling is completed, the terminal device may input the labeled chat interface with the user A and the text content to the model, to obtain a file transfer control in the chat interface with the user A and a tap operation on the file transfer control through model inference. The terminal device may perform the tap operation on the file transfer control, to control the display to switch from displaying the chat interface with the user A to displaying a file selection interface. The terminal device may label the file selection interface. After labeling is completed, the terminal device may input the labeled file selection interface and the text content to the model, to obtain a location of the file B and a tap operation on the location of the file B through model inference. The terminal device may perform the tap operation on the location of the file B, to control the display to switch from displaying the file selection interface to displaying the chat interface with the user A. In this case, in the chat interface with the user A, the file B is successfully transmitted to the user A.

The following describes a process of forming the interface jump information through the UIAutomator or the OCR. The application scenario shown in FIG. 2(a) to FIG. 2(d) is used as an example. The UIAutomator may test each interface element in the setting interface shown in FIG. 2(a) to FIG. 2(d).

For example, the UIAutomator may determine, through a test, that the smart listen tab, the my smart assistant tab, the voice wakeup tab, the speech on-screen tab, the incoming call voice broadcast tab, and the voice skill tab are displayed after the smart assistant tab is tapped. After the my smart assistant tab is tapped, the custom wakeup phrase control and the custom response control are displayed. The UIAutomator may record locations coordinates of each tab and control. For example, pixel coordinates corresponding to the smart assistant tab are [200, 2130], pixel coordinates corresponding to the smart listen tab are [280, 430], pixel coordinates corresponding to the my smart assistant tab are [800, 430], pixel coordinates corresponding to the custom wakeup phrase control are [274, 462], and pixel coordinates corresponding to the custom response control are [700, 462]. The UIAutomator may send information such as an interaction path between the interface elements and an operation on each interface element to the LLM. Therefore, the LLM may construct the interface jump information in the vehicle in advance. In this way, after the user gives a voice instruction, the voice instruction is input to the LLM, and the LLM may output, to the RPA strategy generator based on semantic information corresponding to the voice instruction and the interface jump information constructed in advance, a JSON string used to generate an instruction. For example, the JSON string may include the interaction path (for example, root-an interface element a-an interface element b-...) between the interface elements and the operation (for example, tapping, sliding, zooming in, or zooming out) corresponding to each interface element.

The information such as the interaction path between the interface elements and the operation on each interface element may be a representation manner of the interface jump information. Tools such as the UIAutomator are used to construct interface jump information offline and send the interface jump information to the LLM as prompt information. When obtaining the voice instruction, the LLM may generate the JSON string according to the voice instruction and based on the interface jump information, and send the JSON string to the RPA strategy generator.

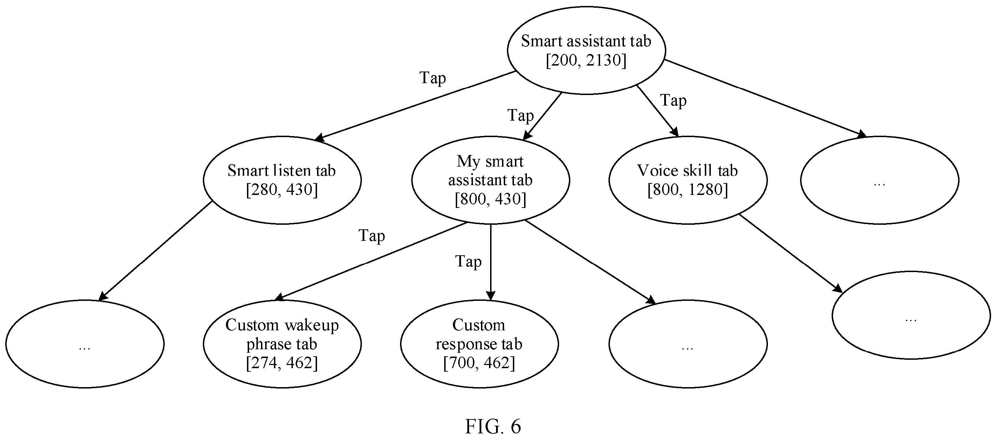

For example, FIG. 6 is a diagram of the interface jump information stored in the LLM according to an embodiment of this application.

After receiving the JSON string sent by the LLM, the RPA strategy generator may generate a combined instruction (65, 22, 13). The combined instruction indicates that the instruction 65, the instruction 22, and the instruction 13 are sequentially executed. Table 4 shows information about each instruction.

**Table 4**

| Instruction ID | Instruction content | Event | Coordinates |
|---|---|---|---|
| 65 | Search for a smart assistant tab | Tap (click) | [200, 2130] |
| 22 | Search for a my smart assistant tab | Tap | [800, 430] |
| 13 | Search for a custom wakeup phrase control | Tap | [274, 462] |

The PRA executor executes the combined instruction (65, 22, 13), to implement interface switching from FIG. 2(a) to FIG. 2(d).

The application scenario shown in FIG. 3(a) to FIG. 3(e) is used as an example. The UIAutomator may test each interface element in the setting interface shown in FIG. 3(b) to FIG. 3(e).

For example, the UIAutomator may determine, through a test, that a vehicle overview tab, the driving safety tab, the vehicle control tab, the vehicle driving tab, the driver assistance tab, and the like may be displayed after the user manual tab is tapped. After the vehicle control tab is tapped, the key tab and the vehicle door tab may be displayed. After the key tab is tapped, the remote control key tab, the mobile phone vehicle key tab, the watch vehicle key tab, and the card key tab may be displayed. After the remote control key tab is tapped, the description content corresponding to the button functions may be displayed. After the remote control key tab is tapped, the description content corresponding to the remote control key emergency mode may be displayed by sliding a preset point (or a progress bar) on the screen upward by a first distance. After the remote control key tab is tapped, the description content corresponding to replacement of the battery of the remote control key may be displayed by sliding a preset point (or a progress bar) on the screen upward by a second distance. The UIAutomator may record location coordinates of each tab or preset point. For example, pixel coordinates corresponding to the user manual tab are pixel coordinates 1, pixel coordinates corresponding to the vehicle overview tab are pixel coordinates 2, pixel coordinates corresponding to the driving safety tab are pixel coordinates 3, pixel coordinates corresponding to the vehicle control tab are pixel coordinates 4, pixel coordinates corresponding to the key tab are pixel coordinates 5, pixel coordinates corresponding to the vehicle door tab are pixel coordinates 6, pixel coordinates corresponding to the remote control key tab are pixel coordinates 7, pixel coordinates corresponding to the mobile phone vehicle key tab are pixel coordinates 8, pixel coordinates corresponding to the watch vehicle key tab are pixel coordinates 9, pixel coordinates corresponding to the card key tab are pixel coordinates 10, and pixel coordinates of the preset point are pixel coordinates 11. The UIAutomator may send information such as an interaction path between the interface elements and an operation on each interface element to the LLM. Therefore, the LLM may construct interface jump information in the vehicle in advance. In this way, after the user gives a voice instruction, the voice instruction is input to the LLM, and the LLM may output, to the RPA strategy generator based on semantic information corresponding to the voice instruction and the interface jump information constructed in advance, a JSON string used to generate an instruction.

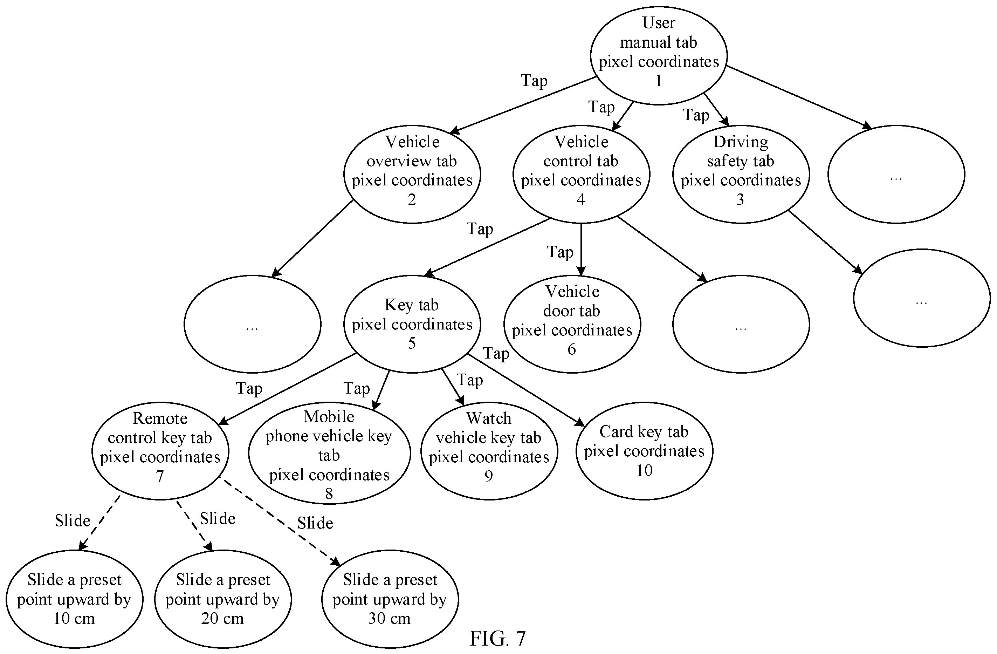

For example, FIG. 7 is a diagram of the interface jump information stored in the LLM according to an embodiment of this application.

After the LLM generates the JSON string for the RPA strategy generator, the RPA strategy generator may generate a combined instruction (53, 48, 12, 79, 93). The combined instruction indicates that the instruction 53, the instruction 48, the instruction 12, the instruction 79, and the instruction 93 are sequentially executed. Table 5 shows information about each instruction.

**Table 5**

| Instruction ID | Instruction content | Event | Coordinates/Sliding distance |
|---|---|---|---|
| 53 | Search for a user manual tab | Tap | Pixel coordinates 1 |
| 48 | Search for a vehicle control tab | Tap | Pixel coordinates 4 |
| 12 | Search for a key tab | Tap | Pixel coordinates 5 |
| 79 | Search for a remote control key tab | Tap | Pixel coordinates 7 |
| 93 | Slide a preset point or a progress bar on a screen upward | Slide | 10 cm |

The PRA executor executes the combined instruction (53, 48, 12, 79, 93), to implement a display change from FIG. 3(b) to FIG. 3(e).

In an embodiment, when obtaining a voice instruction of the user, the vehicle may first determine whether semantic information corresponding to the voice instruction is included in the interface jump information determined in advance. For example, when obtaining a voice instruction "turn up the volume", the LLM may determine that semantic information corresponding to the voice instruction is not in the interface jump information determined by the LLM in advance. For another example, when obtaining a voice instruction "how to set a custom wakeup phrase", the LLM may determine that semantic information corresponding to the voice instruction is included in the interface jump information shown in FIG. 6, so that a corresponding JSON string may be output to the RPA strategy generator, for the RPA strategy generator to generate a corresponding instruction.

In an embodiment, for example, to ensure stability of a result output by the LLM, a scoring mechanism may be used. After execution is performed for a plurality of times, a result following the majority rule is output. The plurality of times of execution may refer to an output or inference process of the LLM for node link information. For example, execution is repeated five times, and based on the scoring mechanism, output stability of the model is ensured, and confidence of the result output by the LLM can also be improved.

In an embodiment, the LLM may further restrict a format of the JSON string output by the LLM, and the JSON string may include information about the interaction path and the instruction ID. The application scenario shown in FIG. 3(a) to FIG. 3(e) is used as an example. The JSON string output by the LLM may include information about an interaction path: the user manual tab-the vehicle control tab-the key tab-the remote control key tab-the preset point and the information about the instruction ID shown in Table 5. In this way, when receiving the JSON string, the RPA strategy generator may generate the corresponding combined instruction.

The foregoing is described by using an example in which the interface jump information includes the interaction path between the plurality of interface elements and the operation on each of the plurality of interface elements. Embodiments of this application are not limited thereto. For example, the interface jump information may further include a jump sequence of the plurality of levels of interfaces and identification information of each interface in the plurality of levels of interfaces.

The application scenario shown in FIG. 2(a) to FIG. 2(d) is used as an example. The interface jump information may include an identifier 1 corresponding to the desktop, an identifier 2 corresponding to the display interface of the vehicle status tab, an identifier 3 corresponding to a display interface of the smart assistant, an identifier 4 corresponding to a display interface of the my smart assistant, and an identifier 5 corresponding to the display interface for entering the custom wakeup phrase, and a jump sequence of these interfaces. For example, if a current display interface is the desktop and a target display interface is the display interface for entering the custom wakeup phrase, the vehicle may perform display interface switching in a sequence of the desktop, the display interface of the vehicle status tab, the display interface of the smart assistant, the display interface of the my smart assistant, and the display interface for entering the custom wakeup phrase. For example, the computing platform 120 may determine, according to the voice instruction, that an identifier of the target interface is the identifier 5 and an identifier of the current display interface is the identifier 1. The computing platform 120 may send, based on the interface jump information, identifiers of the plurality of levels of interfaces from the start interface to the target interface and a jump sequence from the start interface to the target interface to the setting application, so that the setting application can switch from the desktop to the display interface for entering the custom wakeup phrase.

When the interface jump information includes the jump sequence of the plurality of levels of interfaces and the identification information of each interface, an interface switching process may not depend on the interface element. Instead, interface switching is based on different operating system ecosystems (for example, interface switching based on an Android ecosystem, interface switching based on a Harmony ecosystem, or interface switching based on an iOS ecosystem).

For example, as shown in FIG. 2(a), when the vehicle controls the display to display the initial display interface of the setting application, it is detected that the user gives the voice instruction "Xiao A, Xiao A, how to set the custom wakeup phrase of the male voice". In this case, the vehicle may determine, according to the voice instruction given by the user, that the user expects to enter the custom wakeup phrase. Based on the jump sequence of the plurality of levels of interfaces and the identification information of each interface in the plurality of levels of interfaces, the vehicle may first switch, based on the identifier 3, to displaying the display interface of the smart assistant, then switch, based on the identifier 4, to displaying the display interface of the my smart assistant, and finally switch, based on the identifier 5, to displaying the display interface for entering the custom wakeup phrase.

For example, the display interface of the vehicle status tab shown in FIG. 2(a) and the display interface of the smart assistant tab shown in FIG. 2(b) may be display interfaces at a same level. For example, the display interface of the smart assistant tab shown in FIG. 2(b) and the display interface of the my smart assistant tab shown in FIG. 2(c) may be display interfaces at different levels.

The interface jump information may further include a sequence of other display interfaces at a same level. For example, a display interface of a display tab and the display interface of the smart assistant tab shown in FIG. 2(b) may also be display interfaces at a same level. When controlling the display to display the display interface of the display tab and detecting that the user gives the voice instruction "Xiao A, Xiao A, how to set the custom wakeup phrase", the vehicle may determine, according to the voice instruction given by the user, that the user expects to view the display interface for entering the custom wakeup phrase. Based on the jump sequence of the plurality of levels of interfaces and the identification information of each interface in the plurality of levels of interfaces, the vehicle may sequentially switch, based on the identifier 3, from displaying the display interface of the display tab to displaying the display interface of the smart assistant, then switch, based on the identifier 4, to displaying the display interface of the my smart assistant, and finally switch, based on the identifier 5, to displaying the display interface for entering the custom wakeup phrase.

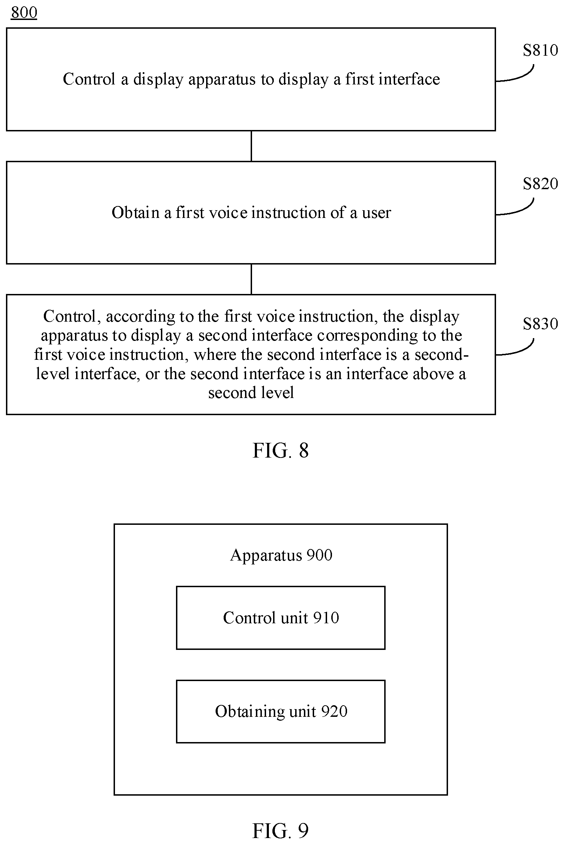

FIG. 8 is a schematic flowchart of a voice interaction method 800 according to an embodiment of this application. The method 800 may be performed by the terminal device 100, or the method 800 may be performed by the computing platform 120, or the method 800 may be performed by a system including the computing platform 120 and the display apparatus 110, or the method 800 may be performed by a system-on-a-chip (system-on-a-chip, SoC) on the computing platform 120, or the method 800 may be performed by a processor, a chip, or a circuit on the computing platform 120. The method 800 includes the following steps.

S810: Control a display apparatus to display a first interface.

Optionally, the first interface is a first-level interface. In this embodiment of this application, an interface displayed by the display apparatus when a voice instruction of a user is received may be referred to as the first-level interface.

For example, as shown in FIG. 2(a), the first interface may be the initial display interface of the setting application, or the first interface may be the display interface of the vehicle status tab.

For example, as shown in FIG. 3(a), the first interface may be the desktop.

For example, as shown in FIG. 4(a), the first interface may be the initial display interface of the video application.

S820: Obtain a first voice instruction of the user.

Optionally, content of the first voice instruction includes content indicating a second-level interface or an interface above a second level.

For example, as shown in FIG. 2(a), the vehicle may obtain the voice instruction "Xiao A, Xiao A, how to set the custom wakeup phrase" given by the user. The first voice instruction includes text content "custom wakeup phrase", and the text content indicates the interface for entering the custom wakeup phrase. The interface for entering the custom wakeup phrase shown in FIG. 2(d) may be a fourth-level interface. Three interface jumps may be performed from the first-level interface to the fourth-level interface.

For example, as shown in FIG. 3(a), the vehicle may obtain the voice instruction "Xiao A, Xiao A, I want to view the remote control key emergency mode" given by the user. The first voice instruction includes text content "remote control key emergency mode", and the text content indicates the interface of the remote control key emergency mode. The interface for entering the custom wakeup phrase shown in FIG. 3(e) may be a fifth-level interface. Four interface jumps may be performed from the first-level interface to the fifth-level interface.

For example, as shown in FIG. 4(a), the vehicle may obtain the voice instruction "Xiao A, Xiao A, I want to watch the movie starring the actor 1" given by the user. The first voice instruction includes text content "movie starring the actor 1", and the text content indicates the playing interface of the "Movie D". The playing interface of the "Movie D" shown in FIG. 4(b) may be a second-level interface. One interface jump may be performed from the first-level interface to the second-level interface.

S830: Control, according to the first voice instruction, the display apparatus to display a second interface corresponding to the first voice instruction, where the second interface is the second-level interface, or the second interface is the interface above the second level.

Optionally, the first interface and the second interface are interfaces of different applications; and controlling, according to the first voice instruction, the display apparatus to display the second interface corresponding to the first voice instruction includes: controlling a first display area of a display to display the first interface and a second display area of the display to display the second interface.

For example, when the voice instruction is obtained, the display of the vehicle is displaying a display interface of a vehicle-mounted map application. After the vehicle obtains the voice instruction, the vehicle may control the first display area of the display to display the display interface of the vehicle-mounted map application, and control the second display area of the display to display the display interface for entering the custom wakeup phrase; or control the second display area to switch from displaying the display interface of the vehicle-mounted map application to displaying the display interface for entering the custom wakeup phrase.

Optionally, the method 800 further includes: determining display locations of the first display area and the second display area on the display apparatus based on an area at which the user who gives the first voice instruction is located.

For example, when the area at which the user who gives the first voice instruction is located is a driver area, the second display area may be controlled to be displayed at a location close to the driver area, and the first display area may be controlled to be displayed at a location away from the driver area. In this way, the user can conveniently view, on the display area close to the area at which the user is located, the interface that the user expects to view.

Optionally, controlling, according to the first voice instruction, the display apparatus to display the second interface corresponding to the first voice instruction includes: controlling, according to the first voice instruction, the display apparatus to display at least one third interface and then display the second interface.

For example, the application scenario shown in FIG. 2(a) to FIG. 2(d) is used as an example. The first interface may be the display interface of the vehicle control tab, the second interface may be the display interface for entering the custom wakeup phrase, and the at least one third interface may be two third interfaces, which are respectively the display interface of the smart assistant tab and the display interface of the my smart assistant tab.

As shown in FIG. 2(a), when the vehicle obtains the voice instruction "Xiao A, Xiao A, how to set the custom wakeup phrase", the vehicle may analyze the voice instruction, to obtain an intent of the user of entering the custom wakeup phrase. In this way, the vehicle may determine that a target interface (the second interface) that the user expects to see is the display interface for entering the custom wakeup phrase. The vehicle may control, according to the voice instruction, the display to switch from displaying the display interface of the vehicle status tab shown in FIG. 2(a) to displaying the display interface for entering the custom wakeup phrase shown in FIG. 2(d). The interfaces shown in FIG. 2(b) and FIG. 2(c) may be the third interface.

Optionally, the method 800 further includes: controlling the display apparatus to display jump progress in the first interface and/or the second interface.

Optionally, controlling, according to the first voice instruction, the display apparatus to display the second interface corresponding to the first voice instruction includes: controlling, according to the first voice instruction and based on first interface jump information, the display apparatus to display the second interface, where the first interface jump information includes jump path information of a plurality of levels of interfaces, and the plurality of levels of interfaces includes the first interface and the second interface.

For example, the application scenario shown in FIG. 2(a) to FIG. 2(d) is used as an example. The jump path information of the plurality of levels of interfaces may include interaction path information between the desktop, the display interface of the vehicle status tab, the display interface of the smart assistant tab, the display interface of the my smart assistant tab, and the display interface for entering the custom wakeup phrase. In this way, after obtaining the voice instruction, the vehicle may first determine an interface (for example, the display interface of the vehicle status tab) currently displayed on the display and the target interface (for example, the display interface for entering the custom wakeup phrase), and then control, based on the jump path information of the plurality of levels of interfaces, the display to switch from displaying the display interface of the vehicle status tab to displaying the display interface for entering the custom wakeup phrase.

Optionally, the jump path information of the plurality of levels of interfaces may further include interaction path information between a display interface of another application and the desktop. For example, when the voice instruction is obtained, the display of the vehicle is displaying the display interface of the vehicle-mounted map application. After obtaining the voice instruction, the vehicle may first control, based on jump path information between the display interface of the another application and the desktop, the display to switch from displaying the display interface of the vehicle-mounted map application to displaying the desktop, and then control, based on jump path information between the desktop, the display interface of the vehicle status tab, the display interface of the smart assistant tab, the display interface of the my smart assistant tab, and the display interface for entering the custom wakeup phrase, the display to switch from displaying the desktop to displaying the display interface for entering the custom wakeup phrase.

For example, the application scenario shown in FIG. 3(a) to FIG. 3(e) is used as an example. The first interface may be the desktop, and the second interface may be the display interface of the description content of the remote control key emergency mode. The at least one third interface may be three third interfaces, which are respectively the initial interface of the driver's guide application, the display interface of the user manual tab, and the display interface of the remote control key tab.

As shown in FIG. 3(a), when the vehicle obtains the voice instruction "Xiao A, Xiao A, I want to view the remote control key emergency mode", the vehicle may analyze the voice instruction, to obtain an intent of the user of viewing the description content of the remote control key emergency mode. In this way, the vehicle may determine that the target interface (the second interface) that the user expects to see is the display interface of the description content of the remote control key emergency mode. The first interface jump information may include jump path information of a plurality of levels of interfaces in a process of switching from the desktop to the display interface of the description content of the remote control key emergency mode. The vehicle may control, according to the voice instruction and based on the first interface jump information, the display to switch from displaying the desktop shown in FIG. 3(a) to displaying the display interface of the description content of the remote control key emergency mode shown in FIG. 3(e).

For example, the application scenario shown in FIG. 4(a) and FIG. 4(b) is used as an example. The first interface may be the initial display interface of the video application, and the second interface may be the display interface of the "Movie D".

As shown in FIG. 4(a), when the vehicle obtains the voice instruction "Xiao A, Xiao A, I want to watch the movie starring the actor 1", the vehicle may analyze the voice instruction, to obtain an intent of the user of watching the movie starring the actor 1. In this way, the vehicle may determine that the target interface (the second interface) that the user expects to see is the display interface of the movie starring the actor 1. The first interface jump information may include jump path information of a plurality of levels of interfaces in a process of switching from the initial display interface of the video application to the display interface of the "Movie D" starring the actor 1. The vehicle may control, according to the voice instruction and based on the first interface jump information, the display to switch from displaying the initial display interface of the video application shown in FIG. 4(a) to displaying the display interface of the "Movie D" shown in FIG. 4(b).

Optionally, the jump path information of the plurality of levels of interfaces may be indicated by an interaction path of a plurality of interface elements and an operation on each of the plurality of interface elements.

For example, a process of jumping from the first interface to the second interface includes one third interface. The plurality of interface elements include a first interface element and a second interface element. The first interface element is located in the first interface, and the second interface element is located in the third interface. Controlling, according to the first voice instruction, the display apparatus to display the at least one third interface includes: performing an operation on the first interface element in the first interface according to the first voice instruction and based on the first interface jump information, to control the display apparatus to switch from displaying the first interface to displaying the third interface; and then displaying the second interface includes: performing an operation on the second interface element in the third interface, to control the display apparatus to switch from displaying the third interface to displaying the second interface.

For example, the jump path information of the plurality of levels of interfaces includes the jump path information between the desktop, the display interface of the vehicle control tab, the display interface of the smart assistant tab, the display interface of the my smart assistant tab, and the display interface for entering the custom wakeup phrase. The jump path information may be indicated by an interaction path of an icon of the setting application-the smart assistant tab-the my smart assistant tab-the custom wakeup phrase control.

The interaction path of the plurality of interface elements may include location information (for example, pixel coordinates) of each of the plurality of interface elements in an interface in which the interface element is located. For example, the icon of the setting application is located in the desktop and pixel coordinates are [300, 1760], the smart assistant tab is located in the display interface of the vehicle control tab and the pixel coordinates are [200, 2130], the my smart assistant tab is located in the display interface of the smart assistant tab and the pixel coordinates are [800, 430], and the custom wakeup phrase control is located in the display interface of the my smart assistant tab and the pixel coordinates are [274, 462].

Based on the interaction path of the plurality of interface elements and the operation on each of the plurality of interface elements, the vehicle may simulate an operation of the user, to implement jumping of the display interfaces. For example, when obtaining the voice instruction "Xiao A, Xiao A, how to set the custom wakeup phrase", the vehicle may analyze the voice instruction, to obtain the intent of the user of entering the custom wakeup phrase or expecting to view the display interface for entering the custom wakeup phrase. The vehicle may determine, based on the intent of the user, that the interface element associated with the target interface (the display interface of the custom wakeup phrase) is the custom wakeup phrase control. When the vehicle obtains the voice instruction, the display displays the display interface of the vehicle status tab, and the display interface of the vehicle status tab includes the smart assistant tab, the vehicle may sequentially perform operations on the smart assistant tab, the my smart assistant tab, and the custom wakeup phrase control based on the interaction path information of the icon of the setting application-the smart assistant tab-the my smart assistant tab-the custom wakeup phrase control and the operation on each interface element, to finally control the display to display the display interface for entering the custom wakeup phrase.

Optionally, controlling, according to the first voice instruction and based on first interface jump information, the display apparatus to display the second interface includes: determining the second interface according to the first voice instruction; determining a first location of the second interface in the jump path information of the plurality of levels of interfaces; determining a jump path from the first interface to the second interface based on a second location of the first interface in the jump path information of the plurality of levels of interfaces, the first location, and the jump path information of the plurality of levels of interfaces; and controlling, based on the jump path information from the first interface to the second interface, the display apparatus to switch from displaying the first interface to displaying the second interface.

For example, the first interface jump information includes a jump sequence of the plurality of levels of interfaces and identification information of each interface in the plurality of levels of interfaces. After obtaining the voice instruction, the vehicle may determine the target interface according to the voice instruction. The vehicle may determine a location of the target interface in the plurality of levels of interfaces and a location of the current interface in the plurality of levels of interfaces. A jump path from the current interface to the target interface may be determined based on the location of the target interface, the location of the current interface, and the jump sequence. The vehicle may control, based on the jump path and the identification information of each interface on the jump path, the display to switch from displaying the current interface to displaying the target interface.

For example, the first interface jump information is indicated by the interaction path of the plurality of interface elements and the operation on each of the plurality of interface elements. After obtaining the voice instruction, the vehicle may determine the target interface according to the voice instruction, and determine, based on the target interface, a location of an interface element 1 associated with the target interface in the interaction path. The vehicle may determine that the interaction path includes an interaction path from an interface element 2 to the interface element 1, and the interface element 2 is an interface element in the current interface. In this way, the vehicle may sequentially perform operations on the plurality of interface elements on the interaction path from the interface element 2 to the interface element 1, to control the display to switch from displaying the current interface to displaying the target interface. The first location of the second interface in the jump path information of the plurality of levels of interfaces may be understood as the location of the interface element 1, and the second location of the first interface in the jump path information of the plurality of levels of interfaces may be understood as the location of the interface element 2. The jump path may be the interaction path from the interface element 2 to the interface element 1.

The foregoing is described by using an example in which the interaction path includes two or more interface elements. Embodiments of this application are not limited thereto. For example, the interaction path may alternatively include one interface element. For example, when controlling the display to display the interface shown in FIG. 3(d), the vehicle detects that the user gives the voice instruction "Xiao A, Xiao A, I want to view the remote control key emergency mode". The vehicle may determine, according to the voice instruction, that the target interface is the interface shown in FIG. 3(e), and the target interface includes a progress bar. In the interface shown in FIG. 3(d), the progress bar is located at an initial location. In the interface shown in FIG. 3(e), the progress bar is located at a location at which the progress bar slides downward by 10 cm from the initial location. The vehicle may perform an operation of sliding the progress bar, to control the display to jump from the current interface to the target interface. The first location of the second interface in the jump path information of the plurality of levels of interfaces may be understood as the location of the progress bar at which the progress bar is located after being slid downward by 10 cm from the initial position, the second position of the first interface in the jump path information of the plurality of levels of interfaces may be understood as the initial position of the progress bar, and the jump path may be switching from the initial location of the progress bar to the location at which the progress bar is located after being slid downward by 10 cm.

Optionally, when the jump path information of the plurality of levels of interfaces includes a plurality of jump paths from the first interface to the second interface, a shortest jump path may be selected from the plurality of jump paths.

For example, the jump path information of the plurality of levels of interfaces includes a jump path of an interface a-an interface b-an interface c-an interface d and a jump path of an interface a-an interface e -an interface f-an interface c-an interface d. When it is determined that an initial interface is the interface a and a target interface is the interface d, a shortest jump path (a jump path of the interface a-the interface b-the interface c-the interface d) may be selected from the two jump paths as the jump path.

Optionally, the second interface is a display interface of a first application, and before obtaining the first voice instruction of the user, the method 800 further includes: obtaining the first interface jump information corresponding to the first application.

Optionally, the method 800 further includes: receiving a system update data packet sent by a cloud server, where the system update data packet includes updated second interface jump information of the first application.

For example, during system upgrade, the vehicle may obtain the system update data packet from the cloud server, where the system update data packet includes the updated interface jump information of the first application. After receiving the updated interface jump information, the vehicle may overwrite the previous interface jump information with the updated interface jump information.

That the vehicle performs system update may be that the vehicle requests the system update data packet from the cloud server after detecting an operation of triggering the system update by the user. Alternatively, after the vehicle detects that the user sets automatic system update, the cloud server sends the system update data packet to the vehicle during system update.

Optionally, the method 800 further includes: sending first request information to the cloud server, where the first request information is used to request interface jump information corresponding to a first version of a second application, and the cloud server stores an association relationship between the first version and the first interface jump information; and receiving the first interface jump information sent by the cloud server.

For example, the second application may be a video application 1. When the vehicle obtains the voice instruction "Xiao A, Xiao A, I want to watch the movie starring the actor 1", the vehicle may analyze the intent of the user, to determine that the user expects to watch the movie starring the actor 1 in an initial interface of the video application 1 currently displayed on the display, where a version of the video application 1 is a version 1. The vehicle may send request information to the cloud server, where the request information is used to request interface jump information corresponding to the version 1 of the video application 1. The cloud server may send, to the vehicle based on a stored correspondence between version information of an application and interface jump information, interface jump information 1 corresponding to the version 1.

For example, Table 6 shows a correspondence that is between version information of an application and interface jump information and that is stored in the cloud server according to embodiments of this application.

**Table 6**

| Application | Version | Interface jump information |
|---|---|---|
| Video application 1 | Version 1 | Interface jump information 1 |
| Video application 2 | Version 2 | Interface jump information 2 |
| Music application 1 | Version 3 | Interface jump information 3 |
| Music application 2 | Version 4 | Interface jump information 4 |
| ... | ... | ... |

In an embodiment, the cloud server may analyze a hierarchical relationship between interfaces of each of a plurality of applications in advance, to obtain the correspondence in Table 6. After the request information sent by the vehicle is received, the interface jump information 1 corresponding to the version 1 is sent to the vehicle.

In an embodiment, when determining that a version of an application is updated, the cloud server may re-determine, based on a hierarchical relationship between different interfaces in the updated application, interface jump information corresponding to the updated version of the application. The cloud server may further overwrite the previous interface jump information with the updated interface jump information.

In an embodiment, the request information sent by the vehicle to the cloud server may include information about the version 1. When receiving the information about the version 1, the cloud server may determine that the vehicle expects to obtain the interface jump information corresponding to the version 1 of the video application. The cloud server may analyze the interface jump information of the version 1 of the video application 1, to obtain the interface jump information 1 and send the interface jump information 1 to the vehicle.

In an embodiment, the cloud server may store correspondences between different versions of the second application and interface jump information. When the first request information is obtained, the interface jump information corresponding to the first version may be searched for based on the correspondence. In this way, when the first version is not a latest version of the second application, the terminal device may obtain, from the cloud server by sending the request information, the first interface jump information corresponding to the first version, to help, based on the first interface jump information, the user accurately find the display interface that the user expects to view.

For example, the second application is the video application 1. Table 7 shows another correspondence that is between version information of an application and interface jump information and that is stored in the cloud server according to embodiments of this application.

**Table 7**

| Application | Version | Interface jump information |
|---|---|---|
| Video application 1 | Version 1 | Interface jump information 1 |
| | Version 5 | Interface jump information 5 |
| Music application 1 | Version 3 | Interface jump information 3 |
| | Version 6 | Interface jump information 6 |
| ... | ... | ... |

For example, the version 5 is a latest version of the video application 1, and the version of the video application 1 in the terminal device may be the version 1 (not the latest version). The request information sent by the vehicle to the cloud server may include information about the version 1. When receiving the information about the version 1, the cloud server may send, to the vehicle based on the correspondence shown in Table 7, the interface jump information 1 corresponding to the version 1.

Optionally, the terminal device stores an association relationship between a second version of a third application and the second interface jump information, and the method 800 further includes: sending second request information to the cloud server when the third version of the third application does not match the second interface jump information, where the second request information is used to request interface jump information corresponding to the third version; and receiving the first interface jump information sent by the cloud server.

For example, the third application is the video application 1, the second version may be the version 1 of the video application 1 (which may be understood as that an initial version of the video application 1 installed on the vehicle is the version 1), and the second interface jump information may be the interface jump information 1 corresponding to the version 1. When the current version 5 of the video application 1 (the version 5 may be a version of the video application 1 that is updated in an application store) does not match the interface jump information 1, the vehicle may send request information to the cloud server, where the request information is used to request interface jump information corresponding to the version 5. When receiving the request information, the cloud server may analyze a hierarchical relationship between interfaces corresponding to the version 5, to obtain the interface jump information 5. The cloud server may send, to the vehicle, the interface jump information 5 corresponding to the version 5. Alternatively, the cloud server has determined the interface jump information 5 corresponding to the version 5 in advance. After receiving the request information, the cloud server may directly send the interface jump information 5 to the vehicle.

That the third version does not match the second interface jump information may be understood as that jump path information for jumping from an interface a to an interface b in the third version of the third application is first jump path information, jump path information for jumping from the interface a to the interface b in the second version is second jump path information, and the first jump path information is different from the second jump path information.

The vehicle may send the request information to the cloud server when the version 5 of the video application 1 does not match the interface jump information 1; or may send the request information to the cloud server when the version 5 of the video application 1 does not match the interface jump information 1 and the voice instruction "Xiao A, Xiao A, I want to watch the movie starring the actor 1" of the user is received.

The interface jump information that is of the video application 1 and that is sent by the cloud server to the vehicle may be interface jump information of interfaces at different levels in the entire video application 1, or may be interface jump information for the voice instruction of the user. For example, the vehicle may obtain the intent of the user after analyzing the voice instruction of the user, and the vehicle may send the request information to the cloud server. The request information includes information about the current display interface (a home page of the video application 1) on the display and the intent of the user. When obtaining the request information, the cloud server may send jump path information of the home page of the video application 1, a details page display interface of the "Movie D", and a playing interface of the "Movie D" to the vehicle based on the information about the current display interface on the display and the intent of the user. For example, the jump path information includes an interaction path of an icon of the "Movie D" on the home page of the video application 1-a play control in the details page display interface of the "Movie D" to operations on the icon and the play control of "Movie D". After receiving the interaction path, the vehicle may first perform, based on the interaction path, a tap operation on the icon of the "Movie D" on the home page of the video application 1, to control the display to switch from displaying the home page of the video application 1 to displaying the details page display interface of the "Movie D"; and then perform a tap operation on the play control in the details page display interface of the "Movie D", to control the display to switch from displaying the details page display interface of the "Movie D" to displaying the play interface of the "Movie D".

Optionally, the method 800 further includes: updating the second interface jump information based on the first interface jump information.

For example, when receiving the interface jump information 5 corresponding to the version 5, the vehicle may overwrite the previous interface jump information 1 with the interface jump information 5.

Optionally, the method 800 further includes: determining that the first interface jump information includes at least a part of text content corresponding to the first voice instruction.

For example, when obtaining the voice instruction "Xiao A, Xiao A, how to set the custom wakeup phrase", the vehicle may analyze the voice instruction, to obtain the intent of the user of entering the custom wakeup phrase or expecting to view the display interface for entering the custom wakeup phrase. The vehicle may first determine that the first interface jump information includes information indicating the display interface for entering the custom wakeup phrase, and may control, based on the first interface jump information, the display to switch from the currently displayed display interface to the display interface for entering the custom wakeup phrase.

For example, when obtaining a voice instruction "Xiao A, Xiao A, please open the sunroof", the vehicle may analyze the voice instruction, to obtain an intent of the user of opening the sunroof. Because the first interface jump information does not include information corresponding to the intent, the vehicle may not perform an operation based on the first interface jump information, but perform an operation of opening the sunroof after determining that the voice instruction is a preset voice control instruction.

FIG. 9 is a block diagram of a voice interaction apparatus 900 according to an embodiment of this application. The apparatus 900 includes: a control unit 910, configured to control a display apparatus to display a first interface, where the first interface is a first-level interface; and an obtaining unit 920, configured to obtain a first voice instruction of a user, where content of the first voice instruction includes content indicating an interface above a second level, where the control unit 910 is further configured to control, according to the first voice instruction, the display apparatus to display a second interface corresponding to the first voice instruction, where the second interface is the interface above the second level.

Optionally, the second interface is an interface of a setting application, a video application, a music application, or a driver's guide application.

Optionally, the control unit 910 is configured to control, according to the first voice instruction, the display apparatus to display at least one third interface and then display the second interface.

Optionally, the control unit 910 is further configured to control the display apparatus to display jump progress in the first interface and/or the second interface.

Optionally, the control unit 910 is configured to control, according to the first voice instruction and based on first interface jump information, the display apparatus to display the second interface, where the first interface jump information includes jump path information of a plurality of levels of interfaces, and the plurality of levels of interfaces includes the first interface and the second interface.

Optionally, the jump path information of the plurality of levels of interfaces is indicated by an interaction path of a plurality of interface elements and an operation on each of the plurality of interface elements.

Optionally, the obtaining unit 920 is configured to input information about the first interface and the content of the first voice instruction to a model, to obtain a first interface element and an operation on the first interface element, where the plurality of interface elements include the first interface element.

Optionally, the second interface is a display interface of a first application; and the obtaining unit 920 is further configured to obtain the first interface jump information corresponding to the first application.

Optionally, the apparatus 900 further includes: a receiving unit, configured to receive a system update data packet sent by a cloud server, where the system update data packet includes updated interface jump information corresponding to the first application.

Optionally, the apparatus 900 further includes: a sending unit, configured to send first request information to a cloud server, where the first request information is used to request interface jump information corresponding to a first version of a second application, and the cloud server stores an association relationship between the first version and the first interface jump information; and a receiving unit, configured to receive the first interface jump information sent by the cloud server.

Optionally, a terminal device stores an association relationship between a second version of a third application and the second interface jump information, and the apparatus 900 further includes: a sending unit, configured to send second request information to the cloud server when the third version of the third application does not match the second interface jump information, where the second request information is used to request interface jump information corresponding to the third version; and a receiving unit, configured to receive the first interface jump information sent by the cloud server, where the first interface jump information is the interface jump information corresponding to the third version of the third application.

Optionally, the first interface and the second interface are interfaces of different applications; and the control unit 910 is configured to control, according to the first voice instruction, a first display area of the display apparatus to display the first interface and a second display area of the display apparatus to display the second interface.

For example, the control unit 910 may be the computing platform in FIG. 1, or a processing circuit, a processor, or a controller on the computing platform. For example, the control unit 910 is the processor 121 on the computing platform. The processor 121 may control the display apparatus to display the first interface. The processor 121 may further control, according to the voice instruction of the user, the display apparatus to switch from displaying the first interface to displaying the second interface.

For another example, the obtaining unit 920 may be the computing platform in FIG. 1, or a processing circuit, a processor, or a controller on the computing platform in FIG. 1. For example, the obtaining unit 920 is the processor 122 on the computing platform. The processor 122 may control the display apparatus to obtain the voice instruction of the user.

Functions implemented by the control unit 910 and functions implemented by the obtaining unit 920 may be implemented by different processors, or may be achieved by a same processor. This is not limited in embodiments of this application.

It should be understood that division into the units in the foregoing apparatus is merely division into logical functions. In practice, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All of the units of the foregoing apparatus may be implemented in a form of software invoked by the processor, or all of the units may be implemented in a form of a hardware circuit, or some of the units may be implemented in a form of software invoked by the processor, and a remaining part may be implemented in a form of a hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated and implemented in a form of a SoC. The SoC may include at least one processor, configured to implement any one of the foregoing methods or implement the functions of the units in the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in a terminal device, the processing unit may be the processors 121 to 12n shown in FIG. 1.

An embodiment of this application further provides a system. The system includes a display apparatus and a computing platform. The computing platform includes the apparatus 900.

An embodiment of this application further provides a terminal device. The terminal device may include the apparatus 900, or the terminal device may include the system.

For example, the terminal device may be a vehicle.

An embodiment of this application further provides a computer program product. The computer program product includes computer program code, and when the computer program code is executed by one or more processors, a terminal device is enabled to perform the method.

An embodiment of this application further provides a computer-readable storage medium. The computer-readable storage medium stores program code, and when the computer program code is executed by one or more processors, a terminal device is enabled to perform the method.

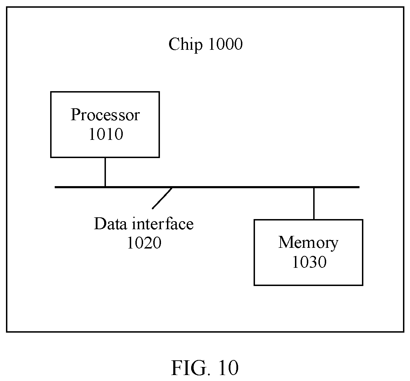

FIG. 10 is a block diagram of a chip 1000 according to an embodiment of this application. The chip 1000 includes a processor 1010, a data interface 1020, and a memory 1030. The processor 1010 reads, through the data interface 1020, instructions stored in the memory 1030, so that a terminal device performs the method.

In an implementation process, the steps in the foregoing method may be completed through a hardware integrated logic circuit in the processor or by using instructions in a form of software. The method disclosed with reference to embodiments of this application may be directly performed and completed by a hardware processor, or may be performed and completed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein.

It should be understood that in this embodiment of this application, the memory may include a read-only memory and a random access memory, and provide instructions and data for the processor.

It should be further understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separated, and components shown as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voice interaction method, comprising:
controlling a display apparatus to display a first interface, wherein the first interface is a first-level interface;
obtaining a first voice instruction of a user, wherein content of the first voice instruction comprises content indicating an interface above a second level; and
controlling, according to the first voice instruction, the display apparatus to display a second interface corresponding to the first voice instruction, wherein the second interface is the interface above the second level.

2. The method according to claim 1, wherein the second interface is an interface of a driver's guide application, a setting application, a video application, or a music application.

3. The method according to claim 1 or 2, wherein controlling, according to the first voice instruction, the display apparatus to display the second interface corresponding to the first voice instruction comprises:
controlling, according to the first voice instruction, the display apparatus to display at least one third interface and then display the second interface.

4. The method according to any one of claims 1 to 3, wherein the method further comprises:
controlling the display apparatus to display jump progress in the first interface and/or the second interface.

5. The method according to claim 1 or 2, wherein controlling, according to the first voice instruction, the display apparatus to display the second interface corresponding to the first voice instruction comprises:
controlling, according to the first voice instruction and based on first interface jump information, the display apparatus to display the second interface, wherein the first interface jump information comprises jump path information of a plurality of levels of interfaces, and the plurality of levels of interfaces comprise the first interface and the second interface.

6. The method according to claim 5, wherein the jump path information of the plurality of levels of interfaces is indicated by an interaction path of a plurality of interface elements and an operation on each of the plurality of interface elements.

7. The method according to claim 6, further comprising:
inputting information about the first interface and the content of the first voice instruction to a model, to obtain a first interface element and a first operation on the first interface element, wherein the plurality of interface elements comprise the first interface element.

8. The method according to claim 5 or 6, wherein the second interface is an interface of a first application, and the method further comprises:
obtaining the first interface jump information corresponding to the first application.

9. The method according to claim 8, wherein
the first interface jump information is comprised in a system update data packet sent by a cloud server.

10. The method according to claim 8, wherein obtaining the first interface jump information corresponding to the first application comprises:
sending first request information to a cloud server, wherein the first request information is used to request interface jump information corresponding to a first version of the first application; and
receiving the first interface jump information sent by the cloud server, wherein the first interface jump information is the interface jump information corresponding to the first version of the first application.

11. The method according to claim 8, wherein obtaining the first interface jump information corresponding to the first application comprises:
sending second request information to a cloud server when a first version of the first application does not match second interface jump information, wherein the second request information is used to request interface jump information corresponding to the first version; and
receiving the first interface jump information sent by the cloud server, wherein the first interface jump information is the interface jump information corresponding to the first version of the first application.

12. The method according to any one of claims 1 to 11, wherein the first interface and the second interface are interfaces of different applications; and
controlling, according to the first voice instruction, the display apparatus to display the second interface corresponding to the first voice instruction further comprises:
controlling, according to the first voice instruction, a first display area of the display apparatus to display the first interface and a second display area of the display apparatus to display the second interface.

13. A voice interaction apparatus, comprising:
a control unit, configured to control a display apparatus to display a first interface, wherein the first interface is a first-level interface; and
an obtaining unit, configured to obtain a first voice instruction of a user, wherein content of the first voice instruction comprises content indicating an interface above a second level, wherein
the control unit is further configured to control, according to the first voice instruction, the display apparatus to display a second interface corresponding to the first voice instruction, wherein the second interface is the interface above the second level.

14. The apparatus according to claim 13, wherein the second interface is an interface of a driver's guide application, a setting application, a video application, or a music application.

15. The apparatus according to claim 13 or 14, wherein
the control unit is configured to control, according to the first voice instruction, the display apparatus to display at least one third interface and then display the second interface.

16. The apparatus according to any one of claims 13 to 15, wherein
the control unit is further configured to control the display apparatus to display jump progress in the first interface and the second interface.

17. The apparatus according to claim 13 or 14, wherein the control unit is configured to:
control, according to the first voice instruction and based on first interface jump information, the display apparatus to display the second interface, wherein the first interface jump information comprises jump path information of a plurality of levels of interfaces, and the plurality of levels of interfaces comprise the first interface and the second interface.

18. The apparatus according to claim 17, wherein the jump path information of the plurality of levels of interfaces is indicated by an interaction path of a plurality of interface elements and an operation on each of the plurality of interface elements.

19. The apparatus according to claim 18, wherein the obtaining unit is configured to:
input information about the first interface and the content of the first voice instruction to a model, to obtain a first interface element and an operation on the first interface element, wherein the plurality of interface elements comprise the first interface element.

20. The apparatus according to claim 17 or 18, wherein the second interface is an interface of a first application; and
the obtaining unit is further configured to obtain the first interface jump information corresponding to the first application.

21. The apparatus according to claim 20, wherein the first interface jump information is comprised in a system update data packet sent by a cloud server.

22. The apparatus according to claim 20, wherein the apparatus further comprises:
a sending unit, configured to send first request information to a cloud server, wherein the first request information is used to request interface jump information corresponding to a first version of the first application; and
a receiving unit, configured to receive the first interface jump information sent by the cloud server, wherein the first interface jump information is the interface jump information corresponding to the first version of the first application.

23. The apparatus according to claim 20, wherein the apparatus further comprises:
a sending unit, configured to send second request information to a cloud server when a first version of the first application does not match second interface jump information, wherein the second request information is used to request interface jump information corresponding to the first version; and
a receiving unit, configured to receive the first interface jump information sent by the cloud server, wherein the first interface jump information is the interface jump information corresponding to the first version of the first application.

24. The apparatus according to any one of claims 13 to 23, wherein the first interface and the second interface are interfaces of different applications; and
the control unit is further configured to:
control, according to the first voice instruction, a first display area of the display apparatus to display the first interface and a second display area of the display apparatus to display the second interface.

25. A voice interaction apparatus, comprising:
a memory, configured to store a computer program; and
a processor, configured to execute the computer program stored in the memory, to enable the apparatus to perform the method according to any one of claims 1 to 12.

26. A system, comprising a display apparatus and a computing platform, wherein the computing platform comprises the apparatus according to any one of claims 13 to 25.

27. A terminal device, comprising the apparatus according to any one of claims 13 to 25, or comprising the system according to claim 26.

28. The terminal device according to claim 27, wherein the terminal device is a vehicle.

29. A computer-readable storage medium, wherein the computer-readable storage medium stores a computer program, and when the computer program is executed by a computer, the method according to any one of claims 1 to 12 is implemented.

30. A chip, wherein the chip comprises a processor and a data interface, and the processor reads, through the data interface, instructions stored in a memory, to perform the method according to any one of claims 1 to 12.
